# EUROPÄISCHE PATENTSCHRIFT

(11) **EP 3 608 261 B1**
(45) Veröffentlichungstag und Bekanntmachung des Hinweises auf die Patenterteilung: **06.01.2021**
(21) Anmeldenummer: 19190956.3
(22) Anmeldetag: 09.08.2019
(51) Int. Cl.: B65G 9/00, B65G 17/20, B65G 19/02

(54) **HÄNGETASCHENGESTELL UND HÄNGETASCHE**
SUSPENSION BAG FRAME AND SUSPENSION BAG
SUPPORT DE SAC SUSPENDU ET SAC SUSPENDU

(30) Priorität: 10.08.2018 DE 102018213489
(43) Veröffentlichungstag der Anmeldung: 12.02.2020
(73) Patentinhaber: RSL Logistik GmbH & Co. KG, 86899 Landsberg (DE)
(72) Erfinder:
(74) Vertreter: Weickmann & Weickmann PartmbB

(56) Entgegenhaltungen:
- EP-A1- 1 420 105
- EP-A1- 2 792 620
- EP-A2- 3 090 967
- DE-A1-102017 201 919
- JP-A- H07 304 514
- US-A- 5 125 500

## Beschreibung

Die vorliegende Erfindung betrifft ein Hängetaschengestell gemäß dem Oberbegriff von Anspruch 1, also ein Hängetaschengestell für eine Hängetasche als Fördergutbehälter zum Transport von Fördergut in einer Hängefördereinrichtung, wobei das Hängetaschengestell einen ersten und einen zweiten Seitenwandrahmen zur Begrenzung einer ersten und einer zweiten Taschenseitenwand umfasst, die einander gegenüberliegend einen Fördergutaufnahmebereich zwischen sich begrenzen, wobei jeder der Seitenwandrahmen jeweils einen oberen und einen unteren Rahmenteil aufweist.

Das gattungsgemäße Hängetaschengestell umfasst weiter einen Gelenkmechanismus mit zwei Schwenklagern, bevorzugt in Form von zwei Schwenklagerbauteilen, die an gegenüberliegenden Seitenrändern des Hängetaschengestells vorgesehen sind und zumindest einen der unteren Rahmenteile um eine zugeordnete Schwenkachse schwenkbar lagern, so dass zumindest die unteren Rahmenteile des ersten und zweiten Seitenwandrahmens zum Öffnen des Fördergutaufnahmebereiches aus einer Schließstellung zu einer Öffnungsstellung auseinanderklappbar sind,

Weiterhin umfasst das gattungsgemäße Hängetaschengestell einen Riegelmechanismus mit wenigstens einem zwischen einer Freigabestellung und einer Sperrstellung verstellbaren Riegelelement, welches dazu ausgebildet ist, in der Sperrstellung die unteren Rahmenteile des ersten und zweiten Seitenwandrahmens in der Schließstellung zu verriegeln, sowie einen Spreizmechanismus, der dazu ausgebildet ist, bei oder nach einer Verstellung des wenigstens einen Riegelelements oder der Riegelelemente aus der Sperrstellung in die Freigabestellung die unteren Rahmenteile aus der Schließstellung zur Öffnungsstellung hin auseinanderzuklappen.

Eine derartige gattungsgemäße Hängetasche ist beispielsweise aus der Druckschrift EP 3090967 A2 bekannt.

Bei den in der vorgenannten Druckschrift beschriebenen Hängetaschen ist der Riegelmechanismus jeweils an den unteren Enden der unteren Rahmenteile vorgesehen und beispielsweise durch Rastmittel oder Ähnliches gebildet, während der Spreizmechanismus durch Federelemente gebildet wird, die im Bereich des Gelenkmechanismus vorgesehen sind.

Aufgabe der vorliegenden Erfindung ist es, ein gattungsgemäßes Hängetaschengestell sowie eine damit ausgerüstete Hängetasche bereitzustellen, die vergleichsweise ökonomisch herstellbar sind.

Diese Aufgabe wird durch ein Hängetaschengestell nach Anspruch 1 gelöst.

Besonders bevorzugt ist auch der Spreizmechanismus an einem der Schwenklager oder an beiden Schwenklagern vorgesehen, so dass der Riegelmechanismus und der Spreizmechanismus an dem Gelenkmechanismus integriert sind.

Zur Reduktion der Anzahl von Bauteilen ist bevorzugt vorgesehen, dass der Spreizmechanismus an dem Riegelelement oder den Riegelelementen integriert ist.

Gemäß einer bevorzugten Ausführungsform der Erfindung kann vorgesehen sein, dass durch eine Verstellbewegung des Riegelelements aus der Sperrstellung in die Freigabestellung automatisch ein Auseinanderklappen der unteren Rahmenteile aus der Schließstellung bewirkt wird, also eine Initialöffnung der Hängetasche nach unten. Hierdurch kann die Zahl der zum Entladen notwendigen Handgriffe oder automatisierten Betätigungsbewegungen verringert und der Entladevorgang somit vereinfacht und beschleunigt werden.

Dies kann konstruktiv so gelöst sein, dass das wenigstens eine Riegelelement wenigstens einen Schrägflächenabschnitt umfasst, der dazu ausgebildet ist, bei der Verstellung des Riegelelements aus der Sperrstellung in die Freigabestellung so auf den unteren Rahmenteil des ersten oder/und des zweiten Seitenwandrahmens einzuwirken, dass die unteren Rahmenteile des ersten und des zweiten Seitenwandrahmens aus der Schließstellung zur Öffnungsstellung hin auseinandergeklappt werden. Das heißt, durch die Entriegelungsbewegung des Riegelelements findet automatisch auch eine Initialöffnung der Hängetasche nach unten hin statt.

Bevorzugt umfasst das wenigstens eine Riegelelement zwei Schrägflächenabschnitte von denen der eine Schrägflächenabschnitt den unteren Rahmenteil des ersten Seitenwandrahmens und der andere Schrägflächenabschnitt den unteren Rahmenteil des zweiten Seitenwandrahmens bei einer Verstellung des Riegelelements aus der Sperrstellung in die Freigabestellung so beaufschlagt, dass die unteren Rahmenteile aus der Schließstellung zur Öffnungsstellung hin auseinandergeklappt werden.

Als ein Auseinanderklappen bzw. Zusammenklappen der Rahmenteile wird dabei bevorzugt eine entsprechende Schwenkbewegung beider Rahmenteile relativ zu den Schwenklagern verstanden, aber auch eine entsprechende Schwenkbewegung lediglich eines Rahmenteils relativ zu den Schwenklagern, während sich das andere Rahmenteil nicht relativ zu den Schwenklagern bewegt.

Zu dem vorgenannten Zweck der Initialöffung kann grundsätzlich für den unteren Rahmenteil des ersten und des zweiten Seitenwandrahmens jeweils ein planarer Seitenwandabschnitt mit einer geeigneten Neigung verwendet werden. Bevorzugt können jedoch auch jeweils mehrere, insbesondere mehrere unmittelbar aneinander angrenzende, beispielsweise planare Schrägflächenabschnitte mit jeweils unterschiedlicher Neigung eingesetzt werden, oder auch jeweils wenigstens ein Schrägflächenabschnitt mit sich wenigstens bereichsweise kontinuierlich ändernder Neigung, auf denen bzw. auf dem der untere Rahmenteil des ersten oder/und des zweiten Seitenwandrahmens bei der Verstellung des Riegelelements aus der Sperrstellung in die Freigabestellung vorzugsweise entlang gleitet und dadurch aus der Schließstellung zur Öffnungsstellung hin verstellt wird.

Eine sowohl manuell wie auch maschinell einfach einzuleitende Verstellbewegung kann dadurch erreicht werden, dass das wenigstens eine Riegelelement, bevorzugt jedes der Riegelelemente um eine zugeordnete Riegelachse zwischen der Sperrstellung und der Freigabestellung schwenkbar an dem zugehörigen Schwenklager vorgesehen ist, wobei die Riegelachse bevorzugt im Wesentlichen orthogonal zu der Schwenkachse des wenigstens einen unteren Rahmenteils verläuft.

Zur Verriegelung kann vorgesehen sein, dass das wenigstens eine Riegelelement oder jedes der Riegelelemente wenigstens einen Klauenabschnitt umfasst, der dazu ausgebildet ist, dann, wenn sich die unteren Rahmenteile des ersten und zweiten Seitenwandrahmens in der Schließstellung und das Riegelelement in der Sperrstellung befinden, das untere Rahmenteil des ersten oder/und des zweiten Seitenwandrahmens wenigstens bereichsweise zu übergreifen und so an einer Verstellung aus der Schließstellung heraus zu hindern.

Bevorzugt werden also die Verriegelungsfunktionen und die Spreizfunktion durch unterschiedliche Konturen des Riegelelements bereitgestellt.

Um einen sicheren Verschluss der Hängetaschen zu gewährleisten, kann vorgesehen sein, dass das wenigstens eine Riegelelement oder jedes der Riegelelemente zur Sperrstellung hin vorgespannt ist, vorzugsweise vermittels einer an dem zugehörigen Schwenklager vorgesehenen Feder.

Alternativ oder zusätzlich kann vorgesehen sein, Gewicht, Schwerpunkt und Lagerung des Riegelelements so zu gestalten, dass dieses unter Einwirkung der Schwerkraft in die Sperrstellung zurückkehrt, wenn sich die Hängetasche in der hängenden Transportstellung befindet und keine Kraft von außen auf das Riegelelement einwirkt, um es in der Freigabestellung zu halten.

Dabei kann eine automatische Verriegelung erreicht werden, indem das Riegelelement wenigstens einen weiteren Schrägflächenabschnitt aufweist, der dazu ausgebildet ist, dann, wenn sich das Riegelelement in der Sperrstellung befindet, von wenigstens einem der unteren Rahmenteile bei dessen Bewegung aus der Öffnungsstellung zur Schließstellung hin so beaufschlagt zu werden, dass sich das Riegelelement aus der Sperrstellung in Richtung auf die Freigabestellung zu bewegt. Auf diese Weise können die unteren Rahmenteile in die Schließstellung zurückkehren.

Um eine variable Be- und Entladung der Hängetasche zu ermöglichen, ist vorzugsweise vorgesehen, dass auch die oberen Rahmenteile des ersten und zweiten Seitenwandrahmens derart an den Schwenklagern des Gelenkmechanismus gelagert oder vorgesehen sind, dass sie zum Öffnen des Fördergutaufnahmebereiches auseinanderklappbar sind.

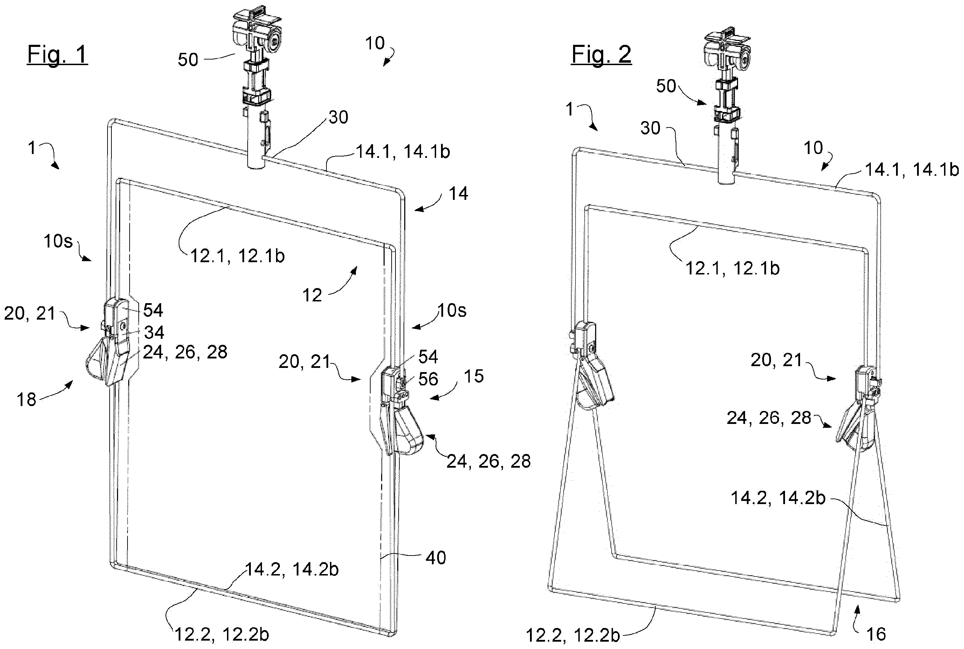

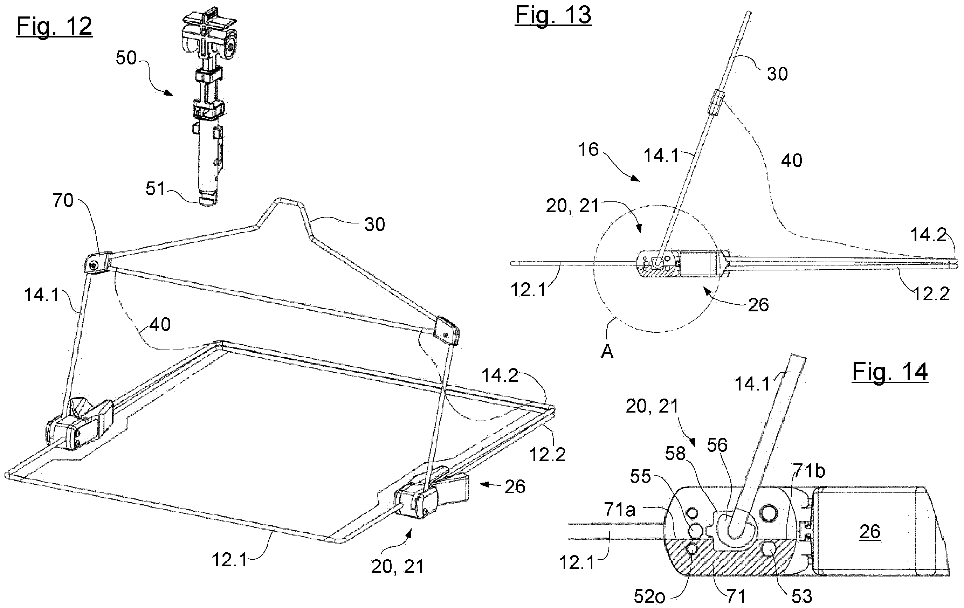

Zusätzlich kann vorgesehen sein, dass der obere Rahmenteil des ersten Seitenwandrahmens drehfest an den Schwenklagern des Gelenkmechanismus vorgesehen ist, wobei ein Bereich des oberen Rahmenteils des zweiten Seitenwandrahmens als Anhängmittel zum Anhängen der Hängetasche an einer Führungsschienenanordnung der Hängefördereinrichtung ausgebildet ist. In diesem Fall können der obere und der untere Rahmenteil des ersten Seitenwandrahmens als Einheit gegenüber dem an der Führungsschienenanordnung anhängenden oberen Rahmenteil des zweiten Seitenwandrahmens verschwenkt werden, um den Fördergutaufnahmebereich zu öffnen, ähnlich wie es in Figur 2c der EP3090967 gezeigt ist. Ebenfalls ist eine Öffnung der Hängetasche in einem liegenden Zustand, einfach möglich, insbesondere auch mit einem Öffnungswinkel von bis zu 180°, wie im Zusammenhang mit der Beschreibung von Fig. 12 genauer erläutert wird.

Das Anhängmittel kann auch separat ausgebildet und an dem oberen Rahmenteil des zweiten Seitenwandrahmens vorgesehen bzw. befestigt sein.

Eine schnell und preiswert herstellbare Hängetasche mit geringem Eigengewicht kann auf Basis von Bügeln, vorzugsweise Metallbügeln, gebildet werden, die mit einer Bespannung versehen sind. Dazu ist bevorzugt vorgesehen, dass das untere Rahmenteil des ersten und zweiten Seitenwandrahmens jeweils ein Bügelelement umfasst, das um eine jeweilige Schwenkachse schwenkbar an den Schwenklagern des Gelenkmechanismus gelagert ist.

In einer anderen Variante kann vorgesehen sein, dass die erste Taschenseitenwand als einstückiges, starres Element ausgebildet ist, etwa in der Form eines Tabletts, dessen Randbereich dann den Seitenwandrahmen der ersten Taschenseitenwand bildet, und an dessen Seitenrändern die Schwenklager vorgesehen oder ausgebildet sind, die zwei Bügelelemente für den oberen und den unteren Rahmenteil des zweiten Seitenwandrahmens schwenkbar bzw. zumindest nach Lösen einer Schwenksicherung schwenkbar lagern. Die beiden vorgenannten Bügelelemente können dann wiederum mit einer Bespannung versehen sein.

Gemäß einer bevorzugten Ausführungsform umfasst auch das obere Rahmenteil des zweiten Seitenwandrahmens ein Bügelelement, das zumindest nach dem Lösen einer Schwenksicherung um eine zugeordnete Schwenkachse schwenkbar an den Schwenklagern des Gelenkmechanismus gelagert ist. Der obere Rahmenteil der ersten Seitenwandrahmens kann dabei aus einem fest, insbesondere drehfest, an den Schwenklagern des Gelenkmechanismus aufgenommenen Bügelelement gebildet sein.

Schon aus Kostengründen ist bevorzugt, dass das wenigstens eine Riegelelement ein Kunststoffmaterial umfasst und vorzugsweise einstückig aus dem Kunststoffmaterial hergestellt ist.

Eine einfache Montage lässt sich dadurch erreichen, dass jedes der Schwenklager mehrere zusammensetzbare Bauteile umfasst, von denen wenigstens zwei, bevorzugt ein Großteil oder alle durch Schnappverbindungen miteinander verbindbar sind. Auf diese Weise wird eine einfache Montage weitgehend oder vollständig ohne zusätzliche Werkzeuge ermöglicht. Aber natürlich ist auch jede andere Verbindung etwa durch Befestigungsmittel wie Schrauben oder Nieten möglich.

Gemäß einer bevorzugten Ausführungsform der Erfindung kann der zumindest eine um die zugeordnete Schwenkachse schwenkbar an den Schwenklagern gelagerte untere Rahmenteil fest mit einem Betätigungshebel verbunden sein, der dazu ausgebildet ist, mit einem an dem Riegelelement vorgesehenen Spreizbetätigungselement zusammenzuwirken, um bei einer Verstellung des Riegelelements von der Sperrstellung in die Freigabestellung die unteren Rahmenteile auseinanderzuklappen. Durch Anpassung von Form, Länge und Position des Hebels kann die zum Auseinanderklappen der unteren Rahmenteile notwendige Kraft und die Art der Betätigung durch das Riegelelement auf einfache Weise an die Anforderungen des gegebenen Einzelfalls angepasst werden.

Bevorzugt sind die beiden unteren Rahmenteile schwenkbar gelagert, besonders bevorzugt um eine gemeinsame Schwenkachse, und jeder der unteren Rahmenteile ist dabei bevorzugt fest mit einem entsprechenden Betätigungshebel verbunden.

In einer hängenden Transportstellung der Hängetasche, in der die unteren Rahmenteile in der Schließstellung im Wesentlichen vertikal nach unten hängen, kann vorgesehen sein, dass der Betätigungshebel oder die Betätigungshebel wenigstens abschnittsweise oberhalb der jeweiligen Schwenkachse angeordnet ist bzw. sind. Durch diese räumliche Trennung kann genügend Platz für die Spreizbetätigung der unteren Rahmenteile durch das Riegelelement bereitgestellt werden, ohne die eigentliche Spreizbewegung zu behindern.

Die für das Aufklappen der unteren Rahmenteile benötigte Kraft und deren zeitlicher Verlauf können auf einfache Weise dadurch eingestellt werden, dass der Betätigungshebel eine Steuerkontur aufweist, die dazu ausgebildet ist, dass bei der Verstellung des Riegelelements von der Sperrstellung in die Freigabestellung das Spreizbetätigungselement des Riegelelements an der Steuerkontur entlang gleitet. Die über die Steuerkontur von dem Spreizbetätigungselement auf das untere Rahmenteil ausgeübte Kraft bewirkt dabei dessen Aufklappbewegung.

An der Steuerkontur können insbesondere Anschläge für Endstellungen des Spreizbetätigungselements vorgesehen sein, die beispielsweise der Schließstellung bzw. der Öffnungsstellung der unteren Rahmenteile entsprechen.

Bevorzugt sind die beiden unteren Rahmenteile um die gleiche Schwenkachse schwenkbar am Schwenklager vorgesehen und weisen jeweils einen Betätigungshebel mit einer Steuerkontur auf, wobei die Steuerkonturen in einer Seitenansicht entlang der Schwenkachse vorzugsweise achsensymmetrisch bezüglich einer Mittelachse ausgebildet und angeordnet sind, so dass die beiden unteren Rahmenteile durch ein am Riegelelement vorgesehenes Spreizbetätigungselement, dessen Bewegung eine Translation entlang der Mittelachse umfasst, symmetrisch auseinander geklappt werden.

Um zu gewährleisten, dass durch die Verstellbewegung des Riegelelements aus der Sperrstellung in die Freigabestellung die unteren Rahmenteile sowohl entriegelt als auch auseinander geklappt werden, umfasst oder ist diese Verstellbewegung vorzugsweise eine Überlagerung aus einer Entriegelungsbewegung und einer Spreizbewegung, wobei die Entriegelungsbewegung die Freigabe der unteren Rahmenteile bewirkt und die Spreizbewegung deren Auseinanderklappen bewirkt. Beispielsweise kann die Entriegelungsbewegung eine Schwenkbewegung sein, und die Spreizbewegung kann eine Translationsbewegung sein.

Gemäß einer bevorzugten Ausgestaltungsform der Erfindung ist das Riegelelement, vorzugsweise jedes der Riegelelemente, derart an dem zugeordneten Schwenklager gelagert, dass die Verstellung des Riegelelements aus der Sperrstellung in die Freigabestellung eine Überlagerung aus einer Schwenkbewegung um eine Riegelachse und einer Translationsbewegung umfasst oder ist. Die Riegelachse verläuft dabei bevorzugt senkrecht zur Schwenkachse. Die Translationsbewegung erfolgt vorzugsweise in einer Richtung, die in einer hängenden Transportstellung der Hängetasche vertikal nach unten verläuft.

Konstruktiv kann eine solche Verstellbewegung des Riegelelements relativ zum Schwenklager auf einfache Weise geführt werden, indem an einem Bauteil aus Riegelelement und Schwenklager, vorzugsweise am Riegelelement, zwei mit Abstand voneinander vorgesehene Führungsbolzen vorgesehen sind, die in zwei am anderen Bauteil aus Riegelelement und Schwenklager, vorzugsweise am Schwenklager, vorgesehenen Führungsöffnungen geführt sind, beispielsweise Langloch-Führungen mit geeigneter Form und Orientierung zueinander, um die gewünschte Bewegung des Riegelements zu bewirken. Die Führungsbolzen erstrecken sich vorzugsweise im Wesentlichen senkrecht zur Schwenkachse des wenigstens einen unteren Rahmenteils.

Durch die Schwenkbewegung kann ein Klauenabschnitt des Riegelelements in Eingriff mit den und außer Eingriff von den unteren Rahmenteilen gebracht werden. Durch die Translationsbewegung kann ein am Riegelelement vorgesehenes Spreizbetätigungselement wenigstens einen Betätigungshebel eines unteren Rahmenteils verschwenken, vorzugsweise die Betätigungshebel beider unterer Rahmenteile.

Um zu verhindern, dass ein in der Hängetasche aufgenommenes Objekt in der Schließstellung der unteren Rahmenteile in unbeabsichtigter Weise nach unten aus der Hängetasche herausfällt, kann vorgesehen sein, dass die beiden unteren Rahmenteile so dimensioniert und angeordnet sind, dass in der Schließstellung und in einer Ansicht entlang der Schwenkachse seitliche Abschnitte der beiden unteren Rahmenteile einander wenigstens abschnittsweise überlappen oder miteinander verschränkt sind. Seitliche Abschnitte der beiden unteren Rahmenteile sind dabei solche, die in der hängenden Transportstellung der Hängetasche zu seitlichen Randabschnitten der Hängetasche gehören.

Schließlich wird ebenfalls Schutz beansprucht für eine Hängetasche, umfassend ein Hängetaschengestell nach der Erfindung oder einer der vorbeschriebenen bevorzugten Ausgestaltungsformen der Erfindung sowie an dem ersten und dem zweiten Seitenwandrahmen vorgesehene Flächenelemente, vorzugsweise in Form einer Bespannung mit einem Folienmaterial oder einem Textilmaterial, so dass der erste Seitenwandrahmen mit dem daran vorgesehenen Flächenelement die erste Taschenseitenwand der Hängetasche bildet, und der zweiten Seitenwandrahmen mit dem daran vorgesehenen Flächenelement die zweite Taschenseitenwand der Hängetasche bildet.

Nachfolgend wird die Erfindung anhand bevorzugter Ausführungsbeispiele näher erläutert, die in den beiliegenden Figuren dargestellt sind. Dabei zeigen:
- Fig. 1: eine perspektivische Ansicht eines Hängetaschengestells bzw. einer Hängetasche gemäß einem ersten Ausführungsbeispiel der Erfindung in der hängenden Transportstellung und im geschlossenen Zustand.
- Fig. 2: den Gegenstand von Fig. 1 im nach unten geöffneten Zustand,
- Fig. 3: den Gegenstand von Fig. 2 in einer Ansicht von vorne,
- Fig. 4: den Gegenstand von Fig. 2 in einer Seitenansicht,
- Fig. 5: in den Teilabbildungen a) bis d) jeweils eine Ausschnittvergrößerung eines der Schwenklager mit daran vorgesehenem Riegelelement der Hängetasche aus den Figuren 1 bis 4 in verschiedenen Ansichten, wobei die Hängetasche sich im nach unten geöffneten Zustand befindet,
- Fig. 6: in den Teilabbildungen a) bis d) jeweils den Gegenstand von Fig. 5 im geschlossenen Zustand der Hängetasche, wobei die Ansichten der Teilabbildungen a) bis d) denjenigen der Figur 5 entsprechen.
- Fig. 7: in den Teilabbildungen a) bis k) verschiedene Ansichten von Einzelteilen, aus denen die Schwenklagerbauteile im Hängetaschengestell des ersten Ausführungsbeispiels zusammengesetzt sind, in verschiedenen Montagestadien,
- Fig. 8: in den Teilabbildungen a) bis e) verschiedene Ansichten des Riegelelements des Hängetaschengestells gemäß dem ersten Ausführungsbeispiel,
- Fig. 9: eine Seitenansicht einer Hängetasche bzw. eines Hängetaschengestells gemäß einem zweiten Ausführungsbeispiel der vorliegenden Erfindung in der hängenden Transportstellung und im nach unten geöffneten Zustand,
- Fig. 10: den Gegenstand von Fig. 9 in einer Ansicht von vorne und im geschlossenen Zustand der Hängetasche bzw. des Hängetaschengestells,
- Fig. 11: in den Teilabbildungen a) und b) jeweils eine Ausschnittvergrößerung des in Fig. 10 mit A bezeichneten Bereichs im geschlossenen und im nach unten geöffneten Zustand,
- Fig. 12: eine perspektivische Ansicht der Hängetasche bzw. des Hängetaschengestells aus Fig. 9 in einer liegenden Stellung und in einem nach oben geöffneten Zustand,
- Fig. 13: eine seitliche, teilweise geschnittene Ansicht des Gegenstands von Fig. 12,
- Fig. 14: eine Ausschnittvergrößerung des in Fig. 13 mit A bezeichneten Bereichs,
- Fig. 15: in Teilabbildung a) eine Seitenansicht eines der Schwenklagerbauteile mit daran vorgesehenem Riegelelement im geschlossenen Zustand der Hängetasche bzw. des Hängetaschengestells gemäß dem zweiten Ausführungsbeispiel sowie in den Teilabbildungen b) bis g) vergrößerte perspektivische Ansichten von Einzelteilen des Gegenstands der Teilabbildung a),
- Fig. 16: in den Teilabbildungen a) bis e) verschiedene Ansichten des Riegelelements des Hängetaschengestells gemäß dem zweiten Ausführungsbeispiel,
- Fig. 17: wesentliche Teile eines dritten Ausführungsbeispiels eines Hängetaschengestells in einer perspektivischen Ansicht, wobei sich die unteren Rahmenteile in der Öffnungsstellung befinden,
- Fig. 18: den Gegenstand von Figur 17 in einer Explosionsdarstellung,
- Fig. 19: in den Teilabbildungen a) bis e) den Gegenstand von Figur 17 in verschiedenen Ansichten, wobei sich die unteren Rahmenteile in den Teilabbildungen a) bis b) in der Schließstellung befinden, in den Teilabbildungen c) bis e) in der Öffnungsstellung, und wobei die Teilabbildungen a), c) bzw. d) Schnittdarstellungen des Gegenstands der Teilabbildungen b), d) bzw. e) entlang der dort mit A-A, C-C bzw. D-D bezeichneten Schnittebene sind.
- Fig. 20: in den Teilabbildungen a) und b) jeweils eine weitere perspektivische Ansicht des Gegenstands von Fig. 17 wobei sich die unteren Rahmenteile in Teilabbildung a) in der Schließstellung befinden und in Teilabbildung b) in der Öffnungsstellung.

Um die Figuren nicht zu überfrachten, sind nicht in jeder Figur alle Merkmale mit Bezugszeichen versehen, sondern im Wesentlichen nur diejenigen, die zum Verständnis der jeweiligen Figur wichtig sind.

Figur 1 zeigt eine perspektivische Ansicht eines ersten Ausführungsbeispiels eines erfindungsgemäßen Hängetaschengestells 10 für eine Hängetasche 1 als Fördergutbehälter zum Transport von Fördergut in einer hier nicht weiter dargestellten Hängefördereinrichtung.

Dabei befindet sich das Hängetaschengestell 10 bzw. die Hängetasche 1 in Fig. 1 im geschlossenen Zustand und in der hängenden Transportstellung.

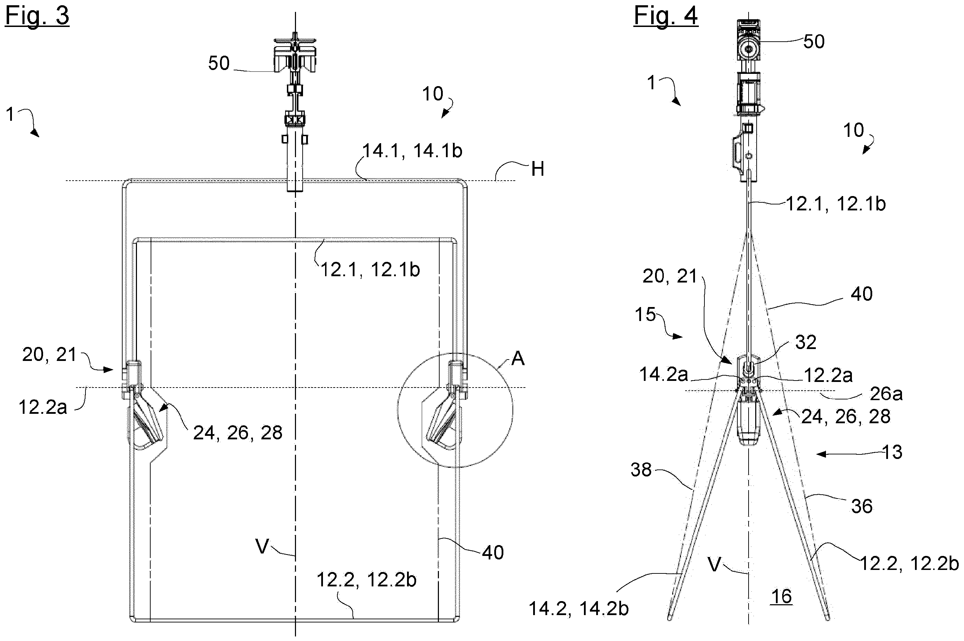

Die Hängetasche 1 ist im vorliegenden Beispiel aus dem Hängetaschengestell 10 und daran vorgesehenen Flächenelementen 36, 38 (vgl. Fig. 4) in Form einer beispielsweise in den Figuren 1, 3 und 4 durch Strichlinien angedeuteten Bespannung 40 gebildet. Diese kann beispielsweise aus einem vorzugsweise elastischen Folien- oder Textilmaterial gebildet sein.

Das Hängetaschengestell 10 in den Figuren 1 bis 4 umfasst einen ersten Seitenwandrahmen 12 zur Begrenzung einer ersten Taschenseitenwand 13 und einen zweiten Seitenwandrahmen 14 zur Begrenzung einer zweiten Taschenseitenwand 15, wobei die erste und die zweite Taschenseitenwand 13, 15 einander gegenüberliegend einen Fördergutaufnahmebereich 16 zwischen sich begrenzen (vgl. Fig. 2 und 4).

Die Bespannung 40 kann seitliche Bereiche umfassen, welche das erste und das zweite Flächenelement 36, 38 seitlich miteinander verbinden, es kann jedoch auch vorgesehen sein, dass der Fördergutaufnahmebereich 16 seitlich offen ist. Ergänzend wird auf die entsprechende Beschreibung in der EP 3090967 A2 verwiesen.

Jeder der Seitenwandrahmen 12 und 14 weist einen oberen Rahmenteil 12.1, 14.1 und einen unteren Rahmenteil 12.2, 14.2 auf, die vorzugsweise jeweils durch Bügelelemente 12.1b, 14,1b, 12.2b, 14.2b gebildet sein können, beispielsweise aus gebogenen Metallstangen.

Die Begriffe "oben" und "unten" beziehen sich, sofern nicht anders angegeben, stets auf die Orientierung der Hängetasche in der beispielsweise in Fig. 1 dargestellten, hängenden Transportstellung.

Ein Bereich des oberen Rahmenteils 14.1 des zweiten Seitenwandrahmens 14 kann als Anhängmittel 30 zum Anhängen der Hängetasche 1 an einer Führungsschienenanordnung der Hängefördereinrichtung ausgebildet sein, wobei zur Verbindung des Anhängmittels mit der Führungsschienenanordnung ein an sich bekanntes und daher hier nicht näher beschriebenes Verbindungsmittel 50 (Trolley) verwendet werden kann, das beispielsweise eine Rotation des Hängetaschengestells 10 um eine vertikale Achse V sowie um eine horizontale Achse H (vgl. Fig. 3 und 4) ermöglicht.

Die oberen und unteren Rahmenteile 12.1, 14.2, 12.2, 14.2 sind in einem Klappenverbindungsbereich 15 durch einen Gelenkmechanismus 18 miteinander gekoppelt.

Der Gelenkmechanismus 18 umfasst zwei Schwenklager 20, hier in Form von zwei separaten Schwenklagerbauteilen 21, die an gegenüberliegenden Seitenrändern 10s des Hängetaschengestells 10 vorgesehen sind.

Die Schwenklager 20 bzw. hier die Schwenklagerbauteile 21 lagern die beiden unteren Rahmenteile 12.2, 14.2 um eine jeweils zugeordnete Schwenkachse 12.2a, 14.2a (vgl. Fig. 4) derart schwenkbar, dass die unteren Rahmenteile 12.2, 14.2 aus der in Fig. 1 dargestellten Schließstellung zum Öffnen des Fördergutaufnahmebereichs 16 zu der in den Figuren 2 bis 4 dargestellten Öffnungsstellung auseinanderklappbar und zum Schließen des Fördergutaufnahmebereichs 16 auch von der Öffnungsstellung zur Schließstellung zusammenklappbar sind. Die Schwenkachsen 12.2a, 14.2a der beiden unteren Rahmenteile 12.2 und 14.2 können dabei parallel zueinander sowie in der hängenden Transportstellung im Wesentlichen horizontal verlaufen.

Es soll jedoch auch nicht ausgeschlossen sein, dass beispielsweise nur der untere Rahmenteil des zweiten Seitenwandrahmens schwenkbar an den Schwenklagern gelagert ist, während der untere Rahmenteil des ersten Seitenwandrahmens drehfest an den Schwenklagern vorgesehen ist, etwa wenn die erste Seitenwand nicht wie im dargestellten Beispiel aus einem aus zwei Bügelelementen bestehenden Seitenwandbügel mit Bespannung sondern aus einer starren Platte gebildet ist, deren Umfangsbereich den ersten Seitenwandrahmen bildet.

An jedem der Schwenklager 20 ist weiterhin ein Riegelelement 26 eines Riegelmechanismus 24 zwischen einer in Fig. 1 dargestellten Sperrstellung und einer in Fig. 2 dargestellten Freigabestellung verstellbar gelagert.

Die beiden Schwenklager 20 sowie die beiden daran vorgesehenen Riegelelemente 26 sind dabei im vorliegenden Beispiel identisch aufgebaut, so dass im Folgenden nur eines der Schwenklager 20 mit dem zugehörigen Riegelelement 26 beschrieben wird.

Insbesondere kann das Riegelelement 26 um eine in Fig. 4 gestrichelt dargestellte Riegelachse 26a schwenkbar an dem zugehörigen Schwenklager 20 bzw. Schwenklagerbauteil 21 vorgesehen sein, wobei im dargestellten Ausführungsbeispiel die Riegelachse 26a senkrecht zu den Schwenkachsen 12.2a und 14.2a der unteren Rahmenteile 12.2, 14.2 sowie in der in den Figuren 1 bis 4 dargestellten hängenden Transportstellung im Wesentlichen horizontal verlaufen kann.

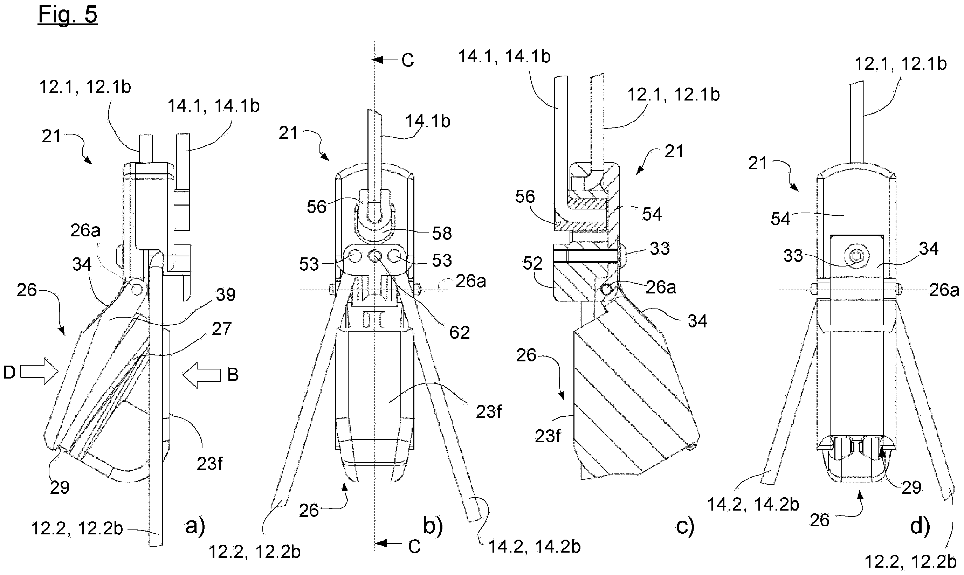

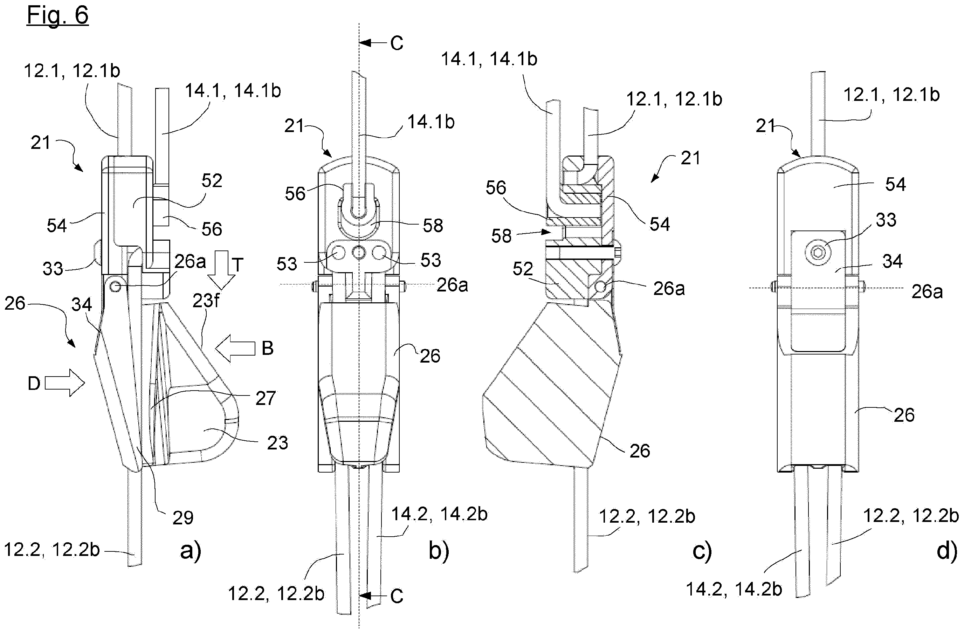

Aufbau und Funktion des Gelenkmechanismus 18, des Riegelmechanismus 24 und des Spreizmechanismus 28 der Hängetasche 1 gemäß dem Ausführungsbeispiel der Figuren 1 bis 4 werden im Folgenden auch unter Bezugnahme auf die Figuren 5 und 6 näher erläutert, die in den Teilabbildungen a) bis d) jeweils Ausschnittvergrößerungen eines Schwenklagers 20 mit daran vorgesehenem Riegelelement 26 in verschiedenen Ansichten zeigen.

Im Einzelnen zeigen dabei die Teilabbildungen a) jeweils eine Ausschnittvergrößerung des in Fig. 3 mit A bezeichneten Bereichs. Die Teilabbildungen b) zeigen jeweils den Gegenstand der Teilabbildungen a), betrachtet in der dort mit B bezeichneten Richtung. Die Teilabbildungen c) zeigen jeweils eine Schnittdarstellung des Gegenstands der Teilabbildungen b) entlang der dort mit C-C bezeichneten Schnittebene, und die Teilabbildungen d) zeigen jeweils den Gegenstand der Teilabbildungen a), betrachtet in der dort mit D bezeichneten Richtung.

Die Figuren 5 und 6 unterscheiden sich dabei lediglich dadurch, dass sich in Fig. 6 das Riegelelement 26 in der Sperrstellung und die unteren Rahmenteile 12.2, 14.2 in der Schließstellung befinden, während sich in Fig. 5 das Riegelelement 26 in der Freigabestellung und die unteren Rahmenteile 12.2, 14.2 in der Öffnungsstellung befinden.

Das Riegelelement 26 ist dazu ausgebildet, in der Sperrstellung die unteren Rahmenteile 12.2, 14.2 des ersten und zweiten Seitenwandrahmens 12, 14 in der Schließstellung zu verriegeln, wie es beispielsweise in den Figuren 1 und 6 dargestellt ist.

Wenn sich die unteren Rahmenteile 12.2, 14.2 in der Schließstellung befinden und sich das Riegelelement 26 in der Sperrstellung befindet, übergreifen zwei Klauenabschnitte 29 des Riegelelements 26 den unteren Rahmenteil 12.2, 14.2 des ersten und des zweiten Seitenwandrahmens 12,14 bereichsweise derart, dass sie die unteren Rahmenteile an einer Verstellung aus der Schließstellung heraus hindern (vgl. Fig. 6a).

Aus der in Fig. 1 bzw. Fig. 6a dargestellten geschlossenen Stellung kann die Hängetasche 1 gemäß dem dargestellten Ausführungsbeispiel auf einfache Weise manuell oder maschinell in die in Figur 2 bzw. Fig. 5 dargestellte, nach unten geöffnete Stellung verbracht werden, indem die beiden Riegelelemente 26 um die Riegelachsen 26a jeweils aus der Sperrstellung nach innen bzw. aufeinander zu in die Freigabestellung verschwenkt werden.

Hierzu kann jedes der Riegelelemente 26 einen Betätigungsabschnitt 23 mit einer in der Sperrstellung vorzugsweise schräg nach unten und nach außen abfallenden Betätigungsfläche 23f aufweisen. Der Betätigungsabschnitt 23 kann in der Sperrstellung am jeweiligen Seitenrand 10s des Hängetaschengestells 10 nach außen in Richtung der Schwenkachsen 12.2a, 14.2a von dem Gestell vorstehen, so dass er einfach zu ergreifen ist, und die Schräge der Betätigungsfläche 23f ermöglicht eine Betätigungsbewegung nach unten, etwa in Richtung des Pfeils T in Fig. 6a).

Durch die Verstellung der Riegelelemente 26 aus der Sperrstellung in die Freigabestellung werden außerdem die unteren Rahmenteile 12.2 und 14.2 durch zwei hierzu an jedem Riegelelement 26 vorgesehene Schrägflächenabschnitte 27 von der Schließstellung zur Öffnungsstellung auseinandergeklappt, wobei die Rahmenteile 12.2, 14.2 auf den Schrägflächenabschnitten 27 entlang gleiten können.

Auf diese Weise findet bei der Entriegelung zugleich und automatisch auch eine Initialöffnung des Hängetaschengestells 10 bzw. der Hängetasche 1 nach unten statt, wozu lediglich eine kurze Beaufschlagung der Betätigungsflächen 23f notwendig ist.

Es kann nämlich vorgesehen sein, dass eine vollständige Öffnung der Hängetasche 1 durch das Herausgleiten oder Herausfallen eines in der Hängetasche aufgenommenen und in den Figuren nicht weiter dargestellten Förderguts nach unten erfolgt.

Im vorliegenden Ausführungsbeispiel können die Riegelelemente 26 jeweils durch eine ebenfalls an dem zugehörigen Schwenklagerbauteil 21 durch ein Befestigungsmittel 33 vorgesehene Feder 34, etwa eine Blattfeder, zur Sperrstellung hin vorgespannt sein.

Dabei kann es dazu kommen, dass die Riegelelemente 26 in die Sperrstellung zurückkehren, bevor die unteren Rahmenteile 12.2, 14.2 nach einer Entleerung der Hängetasche 1 unter dem Einfluss ihres Eigengewichts in die Schließstellung zurückkehren, etwa wenn ein Entladevorgang aufgrund der Größe oder/und Form des Förderguts besonders lange dauert.

Um in diesem Fall ein automatisches Schließen und Verriegeln der Hängetasche 1 zu ermöglichen, kann vorgesehen sein, dass die Riegelelemente 26 weitere Schrägflächenabschnitte 39 (vgl. Fig. 5a) aufweisen, die dazu ausgebildet sind, dann wenn sich die Riegelelemente 26 in der Sperrstellung befinden, von den unteren Rahmenteilen 12.2, 14.2 bei deren Bewegung aus der Öffnungsstellung zur Schließstellung hin so beaufschlagt zu werden, dass sich die Riegelelemente 26 wieder so weit aus der Sperrstellung in Richtung auf die Freigabestellung zu bewegen, dass die unteren Rahmenteile 12.2, 14.2 in die Schließstellung zurückkehren können.

Wie den Schnittdarstellungen der Teilabbildungen 5c) und 6c) zu entnehmen ist, sind die Schwenklagerbauteile 21 jeweils aus mehreren zusammensetzbaren Bauteilen aufgebaut und können im Einzelnen jeweils ein Lagerteil 52, ein Deckelteil 54 und einen Schwenksicherungseinsatz 56 umfassen.

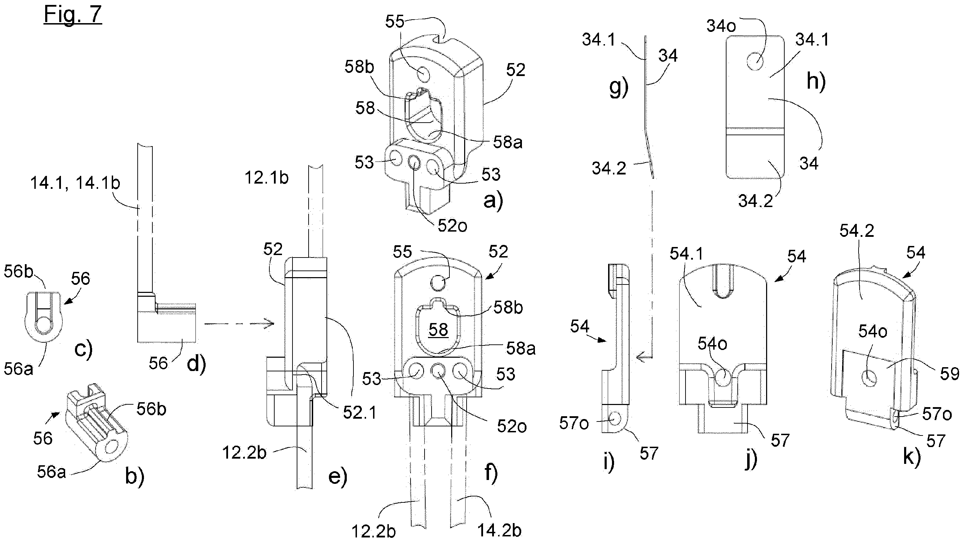

Das auch in den Teilabbildungen a), e) und f) von Figur 7 nochmals separat dargestellte Lagerteil 52 des Schwenklagerbauteils 21 weist in seinem unteren Endbereich zwei untere Schwenklageröffnungen 53 auf, die zur schwenkbaren Lagerung der abgebogenen Enden der unteren Bügelelemente 12.2b, 14.2b dienen und die Schwenkachsen 12.2a, 14.2a definieren.

Zwischen den zwei unteren Schwenklageröffnungen 53 kann sich eine weitere Durchgangsöffnung 52o im Lagerteil befinden, die zur Aufnahme des Befestigungsmittels 33 dient, welches das Lagerteil 52, das Deckelteil 54 und die Feder 34 aneinander fixiert.

Alternativ oder zusätzlich zu der Befestigung mit dem Befestigungsmittel können etwa das Lagerteil 52 und das Deckelteil 54 durch eine Rastverbindung oder Clipsverbindung miteinander verbindbar sein, so dass sie rein manuell, also ohne zusätzliches Werkzeug zusammengesetzt werden können.

Weiterhin weist das Lagerteil 52 in seinem oberen Endbereich eine L-förmige Aufnahme 55 auf, in die der Bügel des oberen Rahmenteils des ersten Seitenwandrahmens eingesteckt werden kann, so dass er nach der Verbindung des Lagerteils 52 mit dem Deckelteil 54 fest mit dem Schwenklagerbauteil 21 verbunden ist.

In einem mittleren Bereich weist das Lagerteil 52 eine Schwenksicherungsöffnung 58 auf, die zusammen mit dem darin einzusetzenden Schwenksicherungseinsatz 56 eine lösbare Schwenksicherung 32 für den oberen Rahmenteil 14.1 des zweiten Seitenwandrahmens 14 bildet.

Diese wirkt ähnlich wie das in der EP 3090967 beschriebene Rastergelenk. Sowohl die Schwenksicherungsöffnung 58 als auch der Schwenksicherungseinsatz 56 weisen einen Drehbereich 58a, 56a und einen Rasterbereich 58b, 56b auf. Der Schwenksicherungseinsatz 56 ist im montierten Zustand vertikal verschiebbar in der Schwenksicherungsöffnung 58 aufgenommen.

Die Montage des Schwenksicherungseinsatzes 56 mit dem daran eingesteckten oberen Rahmenteil 14.1 des zweiten Seitenwandrahmens 14 an dem Lagerteil 52 ist durch den gestrichelten Pfeil zwischen den Teilabbildungen 7d) und 7e) angedeutet.

In der hängenden Transportstellung der Hängetasche 1 stehen aufgrund des Eigengewichts der Hängetasche 1 die Rasterbereiche 58b, 56b miteinander in einem Formschlusseingriff, der ein Verschwenken des oberen Rahmenteils 14.1 des zweiten Seitenwandrahmens 14 gegenüber dem Schwenklagerbauteil 21 verhindert.

Durch Anheben der Schwenklagerbauteile 21 gegenüber dem oberen Rahmenteil 14.1 des zweiten Seitenwandrahmens 14 kann der daran vorgesehene Schwenksicherungseinsatz 56 jedoch so in der Schwenksicherungsöffnung 58 verschoben werden, dass die Rasterbereiche 56b, 58b außer Eingriff voneinander geraten und Schwenksicherungseinsatz 56 und Schwenksicherungsöffnung 58 mit ihren jeweiligen Drehbereichen 58a, 56a aneinander anliegen, was ein Verschwenken des oberen Rahmenteils 14.1 des zweiten Seitenwandrahmens 14 gegenüber dem Schwenklagerbauteil 21 ermöglicht. Ergänzend wird auf die Beschreibung des Rastergelenks in der EP 3090967 verwiesen.

Das im Wesentlichen plattenförmige Deckelteil 54, das auch in den Teilabbildungen 7i), 7j) und 7k) separat in verschiedenen Ansichten dargestellt ist, dient dazu, die lediglich in entsprechende Öffnungen des Lagerteils 52 eingesteckten Bügelelemente 12.1b, 12.2b und14.2b gegen ein Herausfallen zu sichern, und dient weiterhin zur schwenkbaren Lagerung des Riegelelements 26. Hierzu ist am unteren Ende des Deckelteils 54 ein zentraler Lagerfortsatz 57 mit einer Durchgangsöffnung 57o vorgesehen.

Die im montierten Zustand zueinander weisenden Oberflächen 52.1 und 54.1 des Lagerteils 52 und des Deckelteils 54 sind so gestaltet, dass die unteren Rahmenteile 12.2, 14.2 bis zu einem vorgegebenen Maximalwinkel auseinandergeklappt werden können, während das obere Rahmenteil 12.1 des ersten Seitenwandrahmens 12 drehfest an den Schwenklagerbauteilen 21 aufgenommen ist. Hierzu wird insbesondere auf die Teilabbildungen 7a), 7e) und 7j) verwiesen.

Auf der Oberfläche 54.2 des Deckelteils 54, die im montierten Zustand von dem Lagerteil 52 weg weist, ist eine Aufnahmevertiefung 59 zur Aufnahme der Blattfeder 34 vorgesehen. Schließlich weist das Deckelteil 54 im Bereich der Aufnahmevertiefung 59 noch eine weitere Durchgangsöffnung 54o zur Aufnahme des Befestigungsmittels 33 auf.

Die Feder 34, die in den Teilabbildungen 7g) und 7h) nochmals separat in einer Seitenansicht und einer Draufsicht dargestellt ist, ist eine Blattfeder mit im Wesentlichen rechteckiger Form und weist einen ersten Abschnitt 34.1 mit einer Durchgangsöffnung 34o sowie einen zweiten Abschnitt 34.2 auf, der gegenüber dem ersten Abschnitt leicht abgebogen ist. Im montierten Zustand liegt der erste Abschnitt 34.1 an dem Deckelteil 54 an und ist dort vermittels des Befestigungsmittels 33 fixiert, während der zweite Abschnitt 34.2 an einem Beaufschlagungsabschnitt 65 des Riegelelements 26 anliegt und dieses zur Sperrstellung hin vorspannt. Die Montage der Feder 34 an dem Deckelteil 54 ist durch den gestrichelten Pfeil zwischen den Teilabbildungen 7g) und 7i) angedeutet.

Das Riegelelement 26 ist in den Teilabbildungen 8a) bis 8e) nochmals separat in verschiedenen Ansichten dargestellt. Dabei zeigt Teilabbildung 8a) eine perspektivische Ansicht, Teilabbildung 8d) eine Seitenansicht, und die Teilabbildungen 8b), 8c) und 8e) zeigen jeweils eine Ansicht des Gegenstands von Teilabbildung 8d), betrachtet in der dort jeweils mit dem Pfeil B, C und E bezeichneten Richtung.

Das Riegelelement 26 des Hängetaschengestells 10 gemäß dem Ausführungsbeispiel kann bevorzugt einstückig hergestellt sein, beispielsweise aus einem Kunststoffmaterial.

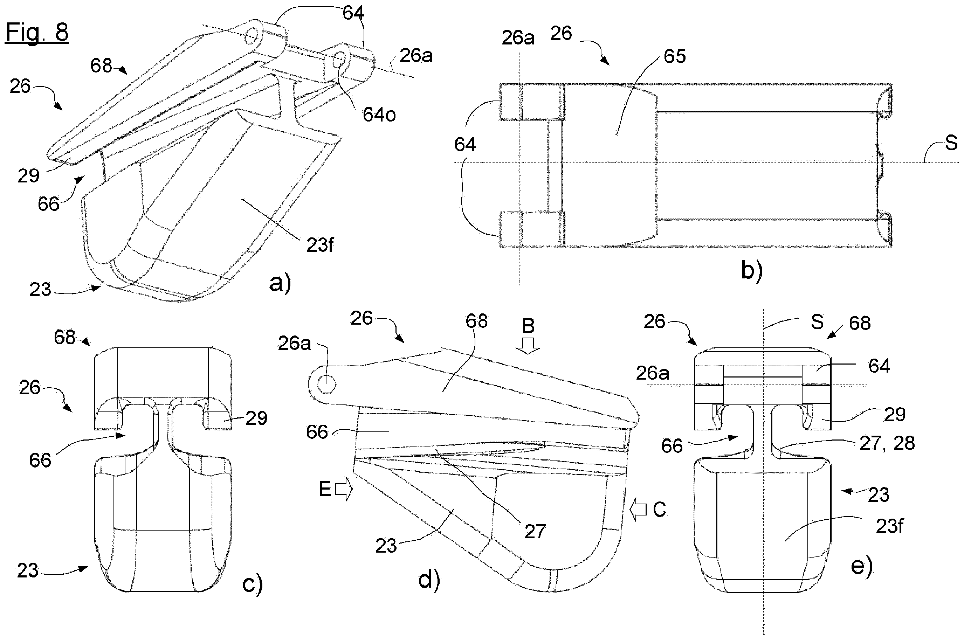

Im vorliegenden Ausführungsbeispiel ist das Riegelelement 26 bevorzugt spiegelsymmetrisch bezüglich der in Fig. 8b) und 8e) angedeuteten Symmetrieebene S aufgebaut.

Neben dem bereits beschriebenen Betätigungsabschnitt 23 umfasst das Riegelelement vorzugsweise zwei Bügelaufnahmeabschnitte 66 und einen Lagerabschnitt 68.

Dabei sind die Bügelaufnahmeabschnitte 66 zur Aufnahme der Bügelelemente 12.2b und 14.2b im Schließzustand der unteren Rahmenteile 12.2, 14.2 und in der Sperrstellung des Riegelelements 26 ausgebildet (vgl. Fig. 6a).

Der Lagerabschnitt 68 kann zwei Lagervorsprünge 64 mit Durchgangsöffnungen 64o aufweisen, um das Riegelelement 26 um die Riegelachse 26a schwenkbar an dem zugehörigen Lagerbauteil 21 aufzunehmen.

An der Seite des Lagerabschnitts 68, der dem Betätigungsabschnitt 23 zugewandt ist, sind die zwei Klauenabschnitte 29 ausgebildet, die wie vorstehend beschrieben, zur Verriegelung der unteren Rahmenteile in der Schließstellung dienen.

Im Grenzbereich zwischen Bügelaufnahmeabschnitt 66 und Betätigungsabschnitt 23 sind die Schrägflächenabschnitte 27 vorgesehen, die den Spreizmechanismus 28 des Hängetaschengestells 10 bilden.

Unterschiedliche Konturen des Riegelelements 26 erfüllen im vorliegenden bevorzugten Ausführungsbeispiel also die Funktionen des Riegelmechanismus 24 und des Spreizmechanismus 28.

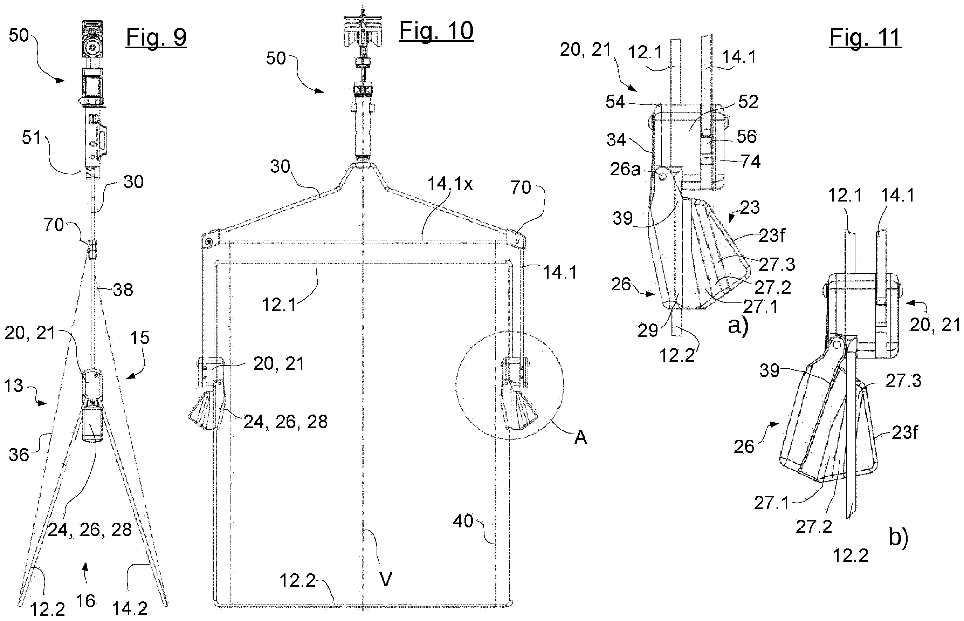

In den Figuren 9 bis 16 ist eine Hängetasche 1 bzw. ein Hängetaschengestell 10 oder Teile davon gemäß einem zweiten Ausführungsbeispiel der Erfindung illustriert.

Für Merkmale der weiteren Ausführungsbeispiele, die solchen des ersten Ausführungsbeispiels entsprechen, werden jeweils die gleichen Bezugszeichen verwendet, und die weiteren Ausführungsbeispiele werden im Wesentlichen auch nur insoweit näher beschrieben, als sie sich von dem ersten Ausführungsbeispiel unterscheiden, auf dessen vorstehende Beschreibung ansonsten explizit verwiesen wird.

Wie die Figuren 9, 10 und 12 zeigen, ist bei dem zweiten Ausführungsbeispiel im Gegensatz zum ersten Ausführungsbeispiel das Anhängmittel 30 des Hängetaschengestells 10 nicht dauerhaft mit dem Verbindungsmittel 50 gekoppelt, sondern kann in ein hakenförmig ausgebildetes unteres Befestigungsende 51 des Verbindungsmittels eingehakt und durch leichtes Anheben auch wieder von diesem getrennt werden, was in Fig. 12 illustriert ist.

Um die Befestigung der Bespannung 40 am oberen Rahmenteil 14.1 des zweiten Seitenwandrahmens 14 zu erleichtern, ist im zweiten Ausführungsbeispiel das Ahängmittel 30 separat von dem Bügelelement 14.1b des oberen Rahmenteils 14.1 des zweiten Seitenwandrahmens 14 ausgebildet und durch zwei Befestigungsmittel 70 an den beiden oberen Ecken des oberen Rahmenteils 14.1 befestigt. Alternativ wäre es auch möglich, das Anhängmittel 30 einstückig mit den Seitenteilen des oberen Rahmenteils 14.1 auszubilden und eine zusätzliche horizontale Querstrebe 14.1x durch die zwei Befestigungsmittel 70 mit dem Anhängmittel 30 zu verbinden, um die Bespannung 40 dann an der Querstrebe 14.1x zu fixieren.

Da der obere Rahmenteil 12.1 des ersten Seitenwandrahmens 12 wie beim ersten Ausführungsbeispiel auch im zweiten Ausführungsbeispiel drehfest an den Schwenklagerbauteilen 21 gelagert ist, können auch hier nach dem Lösen der Schwenksicherung der obere Rahmenteil 12.1 und der untere Rahmenteil 12.2 des ersten Seitenwandrahmens 12 als Einheit und gemeinsam mit dem unteren Rahmenteil 14.2 des zweiten Seitenwandrahmens gegenüber dem beispielsweise an der Führungsschienenanordnung anhängenden oberen Rahmenteil 14.1 des zweiten Seitenwandrahmens verschwenkt werden, um den Fördergutaufnahmebereich 16 nach oben zu öffnen.

Alternativ kann, wie in den Figuren 12 bis 14 illustriert, die Hängetasche 1 vom Verbindungsmittel 50 getrennt und auf eine hier nicht näher dargestellte horizontale Fläche aufgelegt werden, und dann kann der obere Rahmenteil 14.1 des zweiten Seitenwandrahmens 14 gegenüber den Schwenklagerbauteilen 21 und dem Rest der Hängetasche 1 nach oben verschwenkt werden, um den Fördergutaufnahmebereich 16 zu öffnen. Insbesondere ist eine Verschwenkung des oberen Rahmenteils 14.1 des zweiten Seitenwandrahmens über einen Winkelbereich von bis zu 180° möglich.

Um eine definierte Öffnung der Hängetasche um bis zu 180° zu ermöglichen, sind die Schwenklagerbauteile 21 des zweiten Ausführungsbeispiels etwas gegenüber denjenigen des ersten Ausführungsbeispiels modifiziert.

So weist insbesondere das in Teilabbildung 15b) nochmals separat dargestellte Lagerteil 52 des Schwenklagerbauteils 21 im zweiten Ausführungsbeispiel einen stufenartigen Vorsprung 71 mit zwei Anschlagsflächen 71a und 71b auf, an denen der obere Rahmenteil 14.1 des zweiten Seitenwandrahmens 14 in der vollständig geschlossenen bzw. in der um 180° geöffneten Stellung zur Anlage kommt.

Weiterhin umfassen die Schwenklagerbauteile 21 des zweiten Ausführungsbeispiels im Gegensatz zu denjenigen des ersten Ausführungsbeispiels ein zusätzliches, im Wesentlichen plattenförmiges Deckelteil 74, welches in Teilabbildung 15d) separat abgebildet ist und den oberen Rahmenteil 14.1 des zweiten Seitenwandrahmens 14 nach außen hin gegen ein unbeabsichtigtes Lösen vom Schwenklagerbauteil 21 absichert.

Das zusätzliche Deckelteil 74 kann so auf das Lagerteil 52 aufgesteckt werden dass ein an dem Deckelteil 74 integral vorgesehener, stiftförmiger Befestigungsvorsprung 75 in eine Verlängerung der unteren Schwenklageröffnung 53 in dem stufenartigen Vorsprung 71 eingesetzt wird.

Zur Befestigung der einzelnen Bauteile aneinander sind im zweiten Ausführungsbeispiel in der Feder 34, im Deckelteil 54 sowie im Lagerteil 52 im Unterschied zum ersten Ausführungsbeispiel jeweils nicht nur eine sondern zwei Durchgangsöffnungen 34o, 54o, 52o vorgesehen, durch die jeweils ein Befestigungsmittel 33 eingesetzt werden kann.

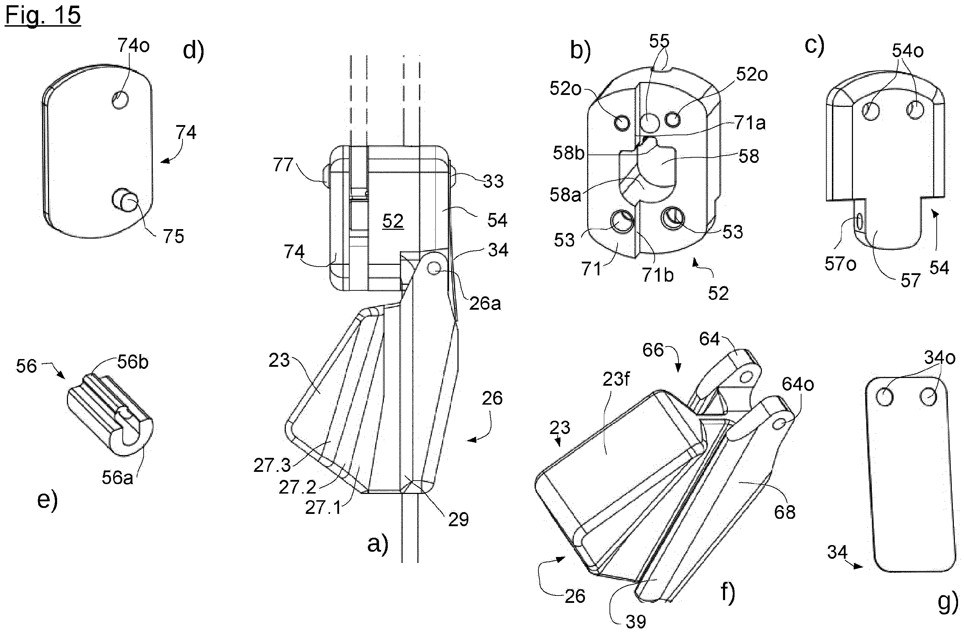

Auch sind im zweiten Ausführungsbeispiel die Durchgangsöffnungen von Deckelteil und Lagerteil nicht im unteren sondern im oberen Bereich des jeweiligen Bauteils vorgesehen, beim Lagerbauteil 52 etwa auf gleicher Höhe mit einem Ende der L-förmigen Aufnahme 55 für den oberen Rahmenteil 12.1 des oberen Seitenwandrahmens (vgl. Fig. 15b)).

Eine der Durchgangsöffnungen 52o im Lagerteil 52 kann sich in den stufenartigen Vorsprung 71 fortsetzen und zur Befestigung des zusätzlichen Deckelteils 74 vermittels eines zusätzlichen Befestigungsmittels 77 dienen, wofür auch im zusätzlichen Deckelteil 74 eine entsprechende Durchgangsöffnung 74o vorgesehen sein kann.

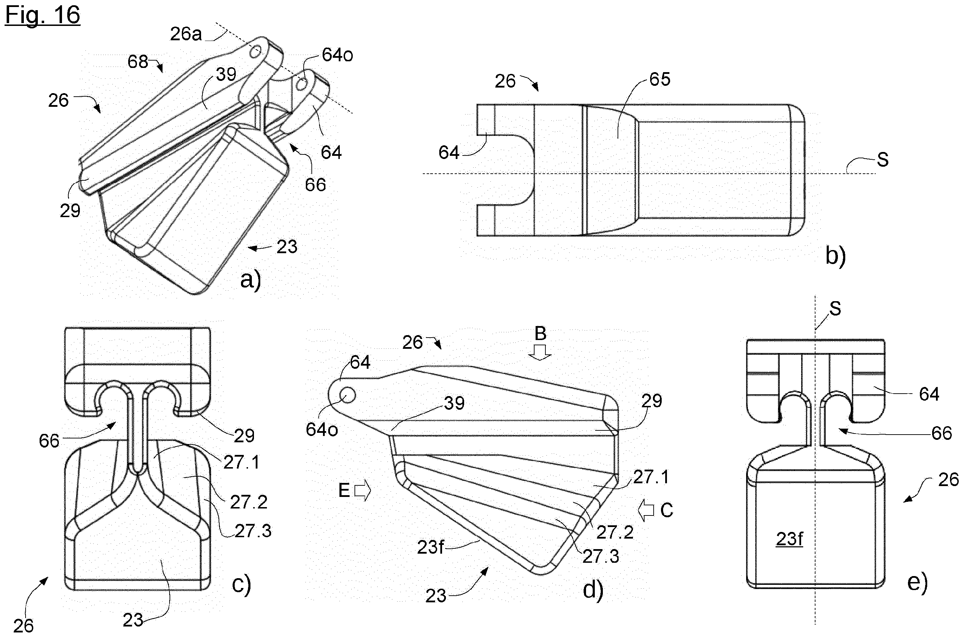

Auch das Riegelelement 26 des zweiten Ausführungsbeispiels, das in den Figur 16 in den Teilabbildungen a) bis e) jeweils separat in verschiedenen Ansichten dargestellt ist, die denen der jeweiligen Teilabbildungen von Fig. 8 entsprechen, ist gegenüber dem Riegelelement des ersten Ausführungsbeispiels leicht modifiziert.

Insbesondere sind für jeden der beiden unteren Rahmenteile jeweils drei Schrägflächenabschnitte 27.1, 27.2 und 27.3 mit unterschiedlichen Neigungen vorgesehen, die eine weichere Initialöffnung ermöglichen als die in der Fläche etwas kleineren Schrägflächenabschnitte 27 des ersten Ausführungsbeispiels.

Zudem sind auch die zur Selbstverriegelung dienenden weiteren Schrägflächenabschnitte 39 des zweiten Ausführungsbeispiels deutlich ausgeprägter als diejenigen des ersten Ausführungsbeispiels.

Die beiden vorbeschriebenen Ausführungsbeispiele unterscheiden sich im Wesentlichen in drei Aspekten: (a) in der Ankopplung des Verbindungsmittels, (b) in Aufbau und Form der Schwenklagerbauteile und (c) in der Form des Riegelelements. Es versteht sich, dass diese drei Aspekte im Wesentlichen unabhängig voneinander sind, so dass die jeweils zwei dargestellten Varianten dieser drei Aspekte in beliebiger Weise kombiniert werden können.

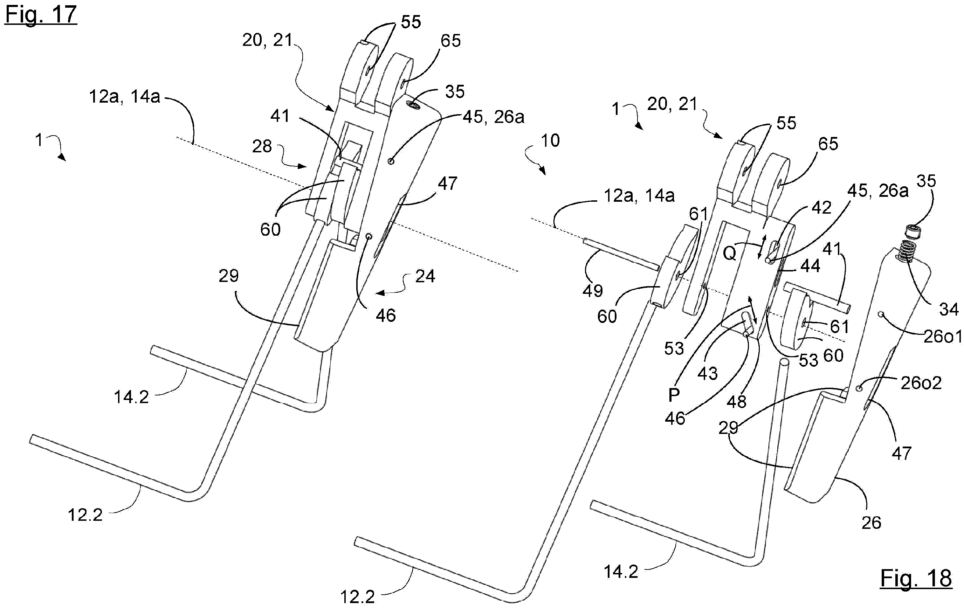

Die Figuren 17 bis 20 stellen wesentliche Teile eines dritten Ausführungsbeispiels einer erfindungsgemäßen Hängetasche dar, und zwar jeweils die unteren Rahmenteile 12.2, 14.2 sowie eines der Schwenklager 20 mit dem daran gelagerten Riegelelement 26. An beiden Seitenrändern des Hängetaschengestells sind bevorzugt gleichartige Schwenklager und Riegelelemente vorgesehen.

Das dritte Ausführungsbeispiel unterscheidet sich von den vorangegangenen Ausführungsbeispielen im Wesentlichen durch die Ausgestaltung des Riegelmechanismus 24 und des Schwenkmechanismus 28.

Zunächst wird der generelle Aufbau anhand der Figuren 17 und 18 näher erläutert.

Die beiden unteren Rahmenteile 12.2 und 14.2 können ähnliche Bügelelemente wie in den beiden ersten Ausführungsbeispielen sein, die mit einer geeigneten Bespannung versehen sein können, die hier nicht dargestellt ist. An den beiden Enden sind die unteren Rahmenteile 12.2, 14.2 im Unterschied zu den ersten Ausführungsbeispielen jeweils fest mit einem Betätigungshebel 60 verbunden.

Diese Betätigunghebel 60 sind im vorliegenden Beispiel als plattenartige Bauteile ausgebildet, die eine Durchgangsöffnung 61 für einen Achsbolzen 49 aufweisen, der im vorliegenden Beispiel die hier zusammenfallenden Schwenkachsen 12a, 14a der beiden unteren Rahmenteile 12.2, 14.2 definiert.

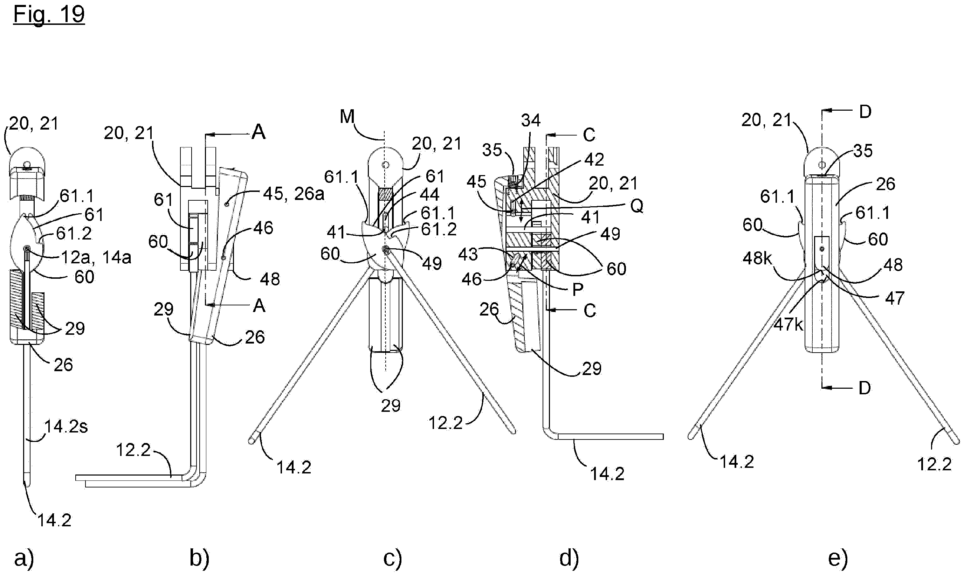

Bezüglich einer in Figur 19c) angedeuteten Mittelachse M sind die beiden Betätigungshebel 60 in einer Seitenansicht entlang der Schwenkachse 12a, 14a achsensymmetrisch zueinander aufgebaut und angeordnet und weisen jeweils eine geschwungene Steuerkontur 61 mit zwei Endanschlägen 61.1 und 61.2 auf.

Die Steuerkontur 61 befindet sich in einem Abschnitt des Betätigungshebels 60, der in der hängenden Transportstellung der Hängetasche mit den unteren Rahmenteilen 12.2, 14.2 in der Schließstellung oberhalb der Schwenkachse 12a, 14a angeordnet ist (vgl. Fig. 19a)).

Die beiden unteren Rahmenteile 12.2, 14.2 sind vermittels der Betätigungshebel 60 und des Achsbolzens 49 schwenkbar an dem dargestellten Schwenklager 20 gelagert, das vorliegend als einstückig ausgebildetes Schwenklagerbauteil 21 vorliegt. Falls gewünscht könnte dieses jedoch wie in den zuvor beschriebenen Beispielen auch aus mehreren zusammensetzbaren Einzelteilen aufgebaut sein.

Neben Schwenklageröffnungen 53 für den Achsbolzen 49 und damit für die beiden unteren Rahmenteile 12.2, 14.2, einer L-förmigen Aufnahme 55 beispielsweise für das hier nicht dargestellte obere Rahmenteil des ersten Seitenwandrahmens und einer weiteren Schwenklageröffnung 65 beispielsweise für das ebenfalls nicht dargestellte obere Rahmenteil des zweiten Seitenwandrahmens kann das Schwenklagerbauteil 21 weiter drei Führungsöffnungen 42, 43 und 44 aufweisen, die in der Explosionsdarstellung von Figur 18 am besten zu erkennen sind. Es handelt sich jeweils um Langloch-Führungen mit unterschiedlichen Orientierungen, die nachfolgend genauer beschrieben werden.

Das Riegelelement 26 ist über zwei daran in Öffnungen 26o1 und 26o2 befestigte Führungsbolzen 45, 46, die in den Führungsöffnungen 42, 43 des Schwenklagers 20 geführt sind, zwischen der in Figur 19b) dargestellten Sperrstellung und der in Figur 19d) dargestellten Freigabestellung verstellbar am Schwenklager 20 gelagert und vermittels einer Feder 34 zur Sperrstellung hin vorgespannt. Die Feder 34 kann beispielsweise mit einer Schraube 35 zwischen dem Schwenklagerbauteil 21 und dem Riegelelement 26 eingespannt sein.

Der obere Führungsbolzen 45 definiert in diesem Beispiel die Schwenkachse 26a des Riegelelements 26. Im Gegensatz zu den ersten beiden Ausführungsbeispielen ist die Schwenkachse 26a im dritten Ausführungsbeispiel bezüglich des Schwenklagers 20 jedoch nicht ortsfest sondern entlang einer in Figur 18 durch einen Doppelpfeil angegebenen Richtung Q verlagerbar, die durch die Orientierung der zugehörigen Führungsöffnung 42 definiert ist.

Die Führungsöffnung 43 verläuft in erster Näherung ebenfalls linear und ist bezüglich der Richtung Q schräg entlang einer Richtung P orientiert, Sie definiert zusammen mit der Führungsöffnung 42 den Verlauf der Verstellbewegung des Riegelelements 26. Es ist klar, dass Form und Verlauf der Führungsöffnungen 42, 43 so zu wählen sind, dass in diesen die Führungsbolzen 45, 46 geführt werden können, die fest am Riegelelement 26 vorgesehen sind und somit einen festen Abstand zueinander haben.

Weiterhin ist in einer seitlich nach außen weisenden Fläche des Riegelelements 26 eine längliche Durchgangsöffnung 47 vorgesehen, durch die zumindest in der Sperrstellung des Riegelelements 26 ein Abschnitt 48 der Schwenklagers 20 hervorstehen kann (vgl. Fig. 19b)). Dabei können die Konturen 47k, 48k der Durchgangsöffnung 47 und des Abschnitts 48 aufeinander abgestimmt sein, wie insbesondere aus Figur 19e) hervorgeht.

Die Verriegelung bzw. Entriegelung der Hängetasche nach unten geschieht auch im dritten Ausführungsbeispiel durch Verschwenken des Riegelelements 26 um die Riegelachse 26a, wodurch am Riegelelement 26 vorgesehene Klauenabschnitte 29 in Eingriff mit bzw. außer Eingriff von den beiden unteren Rahmenteilen 12.2, 14.2 gebracht werden, so dass diese an einer Verstellung aus der Schließstellung gehindert bzw. freigegeben werden.

Im Unterschied zu den ersten beiden Ausführungsbeispielen umfasst die Verstellbewegung des Riegelelements 26 im dritten Ausführungsbeispiel aber neben der vorgenannten Schwenkbewegung auch eine Translationsbewegung entlang der Richtung Q (vgl. Fig. 18 und 19d)).

Bei dieser Translationsbewegung gleitet ein an dem Riegelelement 26 vorgesehener Betätigungsbolzen als Spreizbetätigungselement 41 an den Steuerkonturen 61 der Betätigungshebel 60 entlang und klappt dadurch die unteren Rahmenteile 12.2 14.2 in der Art einer Schere auseinander. Das Spreizbetätigungselement 41 ist vorzugsweise unbeweglich mit dem Riegelelement 26 verbunden und in der Führungsöffnung 44 längs der Richtung Q geführt.

Der Verlauf der Öffnungsbewegung der unteren Rahmenteile 12.2, 14.2 ist dabei unter anderem durch den Verlauf der Steuerkonturen 61 bestimmt. Die Endanschläge 61.1 und 61.2 definieren die Endstellungen des Spreizbetätigungselements 41 und damit der unteren Rahmenteile 12.2, 14.2.

Auch beim dritten Ausführungsbeispiel kann eine Selbstverriegelung der unteren Rahmenteile vorgesehen sein, beispielsweise durch geeignete Schrägflächenabschnitte am Riegelelement 26, wie es für die ersten beiden Ausführungsbeispiele genauer beschrieben ist.

In allen Ausführungsbeispielen kann die Hängetasche durch eine einfache nach unten gerichtete Betätigung der Riegelelemente 26 entriegelt und dabei geöffnet werden, was insbesondere eine automatisierte Entladung mit geringem Platzbedarf ermöglicht.

Wie in Fig. 19a) gezeigt, können die beiden unteren Rahmenteile 12.2, 14.2 so dimensioniert und angeordnet sein, dass in der Schließstellung und in einer Ansicht entlang der Schwenkachse 12a, 14a seitliche Abschnitte 12.2s, 14.2s der beiden unteren Rahmenteile 12.2, 14,2 einander überlappen. So kann in der dargestellten Ansicht der untere Rahmenteil 12.2 des ersten Seitenwandrahmens ganz vom unteren Rahmenteil 14.2 des zweiten Seitenwandrahmens verdeckt und in diesem aufgenommen sein.

Insbesondere sofern die Schwenkachsen 12a, 14a anders als gezeigt nicht zusammenfallen, können die seitlichen Abschnitte der unteren Rahmenteile einander in der vorgenannten Ansicht zumindest abschnittweise überlappen, vorzugsweise in einem unteren Endbereich.

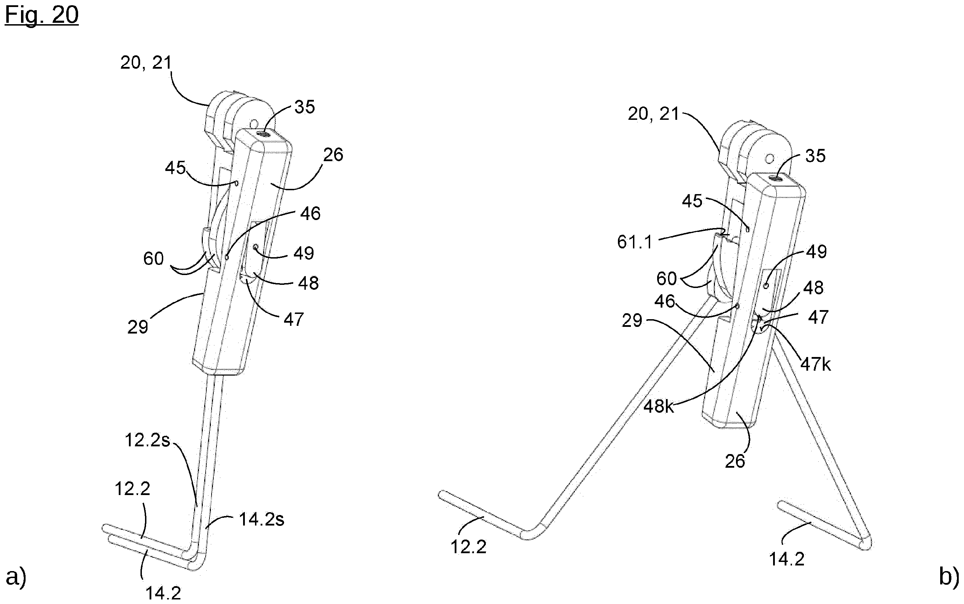

Wie in Fig. 20a) dargestellt, können in der Schließstellung und in einer Ansicht entlang der Schwenkachse 12a, 14a seitliche Abschnitte 12.2s, 14.2s der beiden unteren Rahmenteile 12.2, 14,2 sogar leicht miteinander verschränkt sein. In all diesen Fällen kann das Risiko minimiert werden, dass ein in der Tasche aufgenommenes Objekt unbeabsichtigt nach unten aus der Tasche herausfällt, auch wenn es sich um ein sehr flaches Objekt handelt. Ergänzend wird darauf hingewiesen, dass die in den Figuren 17 bis 20 angedeutete Art der Lagerung der beiden oberen Rahmenteile in der L-förmigen Aufnahme 55 und der Schwenklageröffnung 65 des dritten Ausführungsbeispiels lediglich exemplarisch gewählt ist.

Insbesondere kann der Riegel- und Spreizmechanismus der unteren Rahmenteile des dritten Ausführungsbeispiels mit jeder beliebigen Art der Ausbildung und Lagerung der oberen Rahmenteile kombiniert werden, insbesondere mit der Art, die in den ersten beiden Ausführungsbeispielen beschrieben ist.

Die erfindungsgemäße Hängetasche ist aufgrund der Bügel-Konstruktion leicht im Gewicht, ist einfach und schnell aufzubauen und kann vielfältig eingesetzt werden. Insbesondere kann eine automatisierte Entladung der Hängetasche nach unten auf einfache Weise und mit minimalem Platzbedarf implementiert werden.

## Patentansprüche

1. Hängetaschengestell (10) für eine Hängetasche (1) als Fördergutbehälter zum Transport von Fördergut in einer Hängefördereinrichtung, wobei das Hängetaschengestell (10) umfasst:
- einen ersten und einen zweiten Seitenwandrahmen (12, 14) zur Begrenzung einer ersten und einer zweiten Taschenseitenwand (13, 15), die einander gegenüberliegend einen Fördergutaufnahmebereich (16) zwischen sich begrenzen,
wobei jeder der Seitenwandrahmen (12, 14) einen oberen (12.1, 14.1) und einen unteren Rahmenteil (12.2, 14.2) umfasst,
- einen Gelenkmechanismus (18), umfassend zwei Schwenklager (20), bevorzugt in Form von zwei Schwenklagerbauteilen (21), die an gegenüberliegenden Seitenrändern (10s) des Hängetaschengestells (10) vorgesehen sind und zumindest einen der zwei unteren Rahmenteile (12.2, 14.2) um eine zugeordnete Schwenkachse (12.2a, 14.2a) schwenkbar lagern, so dass zumindest die unteren Rahmenteile (12.2, 14.2) des ersten und zweiten Seitenwandrahmens (12, 14) zum Öffnen des Fördergutaufnahmebereiches (16) aus einer Schließstellung zu einer Öffnungsstellung auseinanderklappbar sind,
- einen Riegelmechanismus (24) mit wenigstens einem zwischen einer Freigabestellung und einer Sperrstellung verstellbaren Riegelelement (26), welches dazu ausgebildet ist, in der Sperrstellung die unteren Rahmenteile (12.2, 14.2) des ersten und zweiten Seitenwandrahmens (12, 14) in der Schließstellung zu verriegeln, und
- einen Spreizmechanismus (28), der dazu ausgebildet ist, bei oder nach einer Verstellung des wenigstens einen Riegelelements (26) aus der Sperrstellung in die Freigabestellung die unteren Rahmenteile (12.2, 14.2) aus der Schließstellung zur Öffnungsstellung hin auseinanderzuklappen,
**dadurch gekennzeichnet, dass** das wenigstens eine Riegelelement (26) zwischen der Sperrstellung und der Freigabestellung verstellbar an einem der Schwenklager (20) vorgesehen oder gelagert ist.

2. Hängetaschengestell (10) nach Anspruch 1,
**dadurch gekennzeichnet, dass** auch der Spreizmechanismus (28) an einem der Schwenklager (20) oder an beiden Schwenklagern (20) vorgesehen ist und dabei bevorzugt jeweils an dem Riegelelement (26) integriert ist.

3. Hängetaschengestell (10) nach Anspruch 2,
**dadurch gekennzeichnet, dass** das wenigstens eine Riegelelement (26) wenigstens einen Schrägflächenabschnitt (27) umfasst, der dazu ausgebildet ist, bei der Verstellung des Riegelelements (26) aus der Sperrstellung in die Freigabestellung so auf den unteren Rahmenteil (12.2, 14.2) des ersten oder/und des zweiten Seitenwandrahmens (12, 14) einzuwirken, dass die unteren Rahmenteile (12.2, 14.2) des ersten und des zweiten Seitenwandrahmens (12, 14) aus der Schließstellung zur Öffnungsstellung hin auseinander geklappt werden.

4. Hängetaschengestell (10) nach einem der Ansprüche 1 bis 3, bevorzugt nach Anspruch 2, **dadurch gekennzeichnet, dass** das wenigstens eine Riegelelement (26), bevorzugt jedes der Riegelelemente (26), um eine Riegelachse (26a) zwischen der Sperrstellung und der Freigabestellung schwenkbar an dem zugehörigen Schwenklager (20) vorgesehen ist, wobei die Riegelachse (26s) im Wesentlichen orthogonal zu der Schwenkachse (12.2a, 14.2a) des wenigstens einen unteren Rahmenteils (12.2, 14.2) verläuft.

5. Hängetaschengestell (10) nach einem der vorhergehenden Ansprüche, **dadurch gekennzeichnet, dass** das wenigstens eine Riegelelement (26) oder jedes der Riegelelemente (26) wenigstens einen Klauenabschnitt (29) umfasst, der dazu ausgebildet ist, dann, wenn sich die unteren Rahmenteile (12.2, 14.2) des ersten und zweiten Seitenwandrahmens (12, 14) in der Schließstellung und das Riegelelement (26) in der Sperrstellung befinden, den unteren Rahmenteil (12.2, 14.2) des ersten oder/und des zweiten Seitenwandrahmens (12, 14) wenigstens bereichsweise zu übergreifen und so an einer Verstellung aus der Schließstellung heraus zu hindern.

6. Hängetaschengestell (10) nach einem der vorhergehenden Ansprüche, **dadurch gekennzeichnet, dass** das wenigstens eine Riegelelement (26) oder jedes der Riegelelemente (26) zur Sperrstellung hin vorgespannt ist, vorzugsweise vermittels einer an dem zugehörigen Schwenklager (20) vorgesehenen Feder (34).

7. Hängetaschengestell (10) nach einem der vorhergehenden Ansprüche, vorzugsweise nach Anspruch 6, **dadurch gekennzeichnet, dass** das Riegelelement (26) wenigstens einen weiteren Schrägflächenabschnitt (39) aufweist, der dazu ausgebildet ist, dann wenn sich das Riegelelement (36) in der Sperrstellung befindet, von wenigstens einem der unteren Rahmenteile (12.2, 14.2) bei dessen Bewegung aus der Öffnungsstellung zur Schließstellung hin so beaufschlagt zu werden, dass sich das Riegelelement (26) aus der Sperrstellung in Richtung auf die Freigabestellung zu bewegt.

8. Hängetaschengestell (10) nach einem der vorhergehenden Ansprüche, **dadurch gekennzeichnet, dass** das wenigstens eine Riegelelement (26) ein Kunststoffmaterial umfasst und vorzugsweise einstückig aus dem Kunststoffmaterial hergestellt ist.

9. Hängetaschengestell (10) nach einem der vorhergehenden Ansprüche, vorzugsweise nach Anspruch 8, **dadurch gekennzeichnet, dass** jedes der Schwenklager (20) mehrere zusammensetzbare Bauteile (52, 54, 56) umfasst, von denen wenigstens zwei, bevorzugt ein Großteil oder alle durch Schnappverbindungen miteinander verbindbar sind.

10. Hängetaschengestell (10) nach einem der vorhergehenden Ansprüche, **dadurch gekennzeichnet, dass** der zumindest eine um die zugeordnete Schwenkachse (12a, 14a) schwenkbar an den Schwenklagern (20) gelagerte untere Rahmenteil (12.2, 14.2) fest mit einem Betätigungshebel (60) verbunden ist, der dazu ausgebildet ist, mit einem an dem Riegelelement (26) vorgesehenen Spreizbetätigungselement (41) zusammenzuwirken, um bei einer Verstellung des Riegelelements (26) von der Sperrstellung in die Freigabestellung die unteren Rahmenteile (12.2, 14.2) auseinanderzuklappen.

11. Hängetaschengestell (10) nach Anspruch 10, **dadurch gekennzeichnet, dass** in einer hängenden Transportstellung der Hängetasche (1) der Betätigungshebel (60) wenigstens abschnittsweise oberhalb der Schwenkachse (12a, 14a) angeordnet ist.

12. Hängetaschengestell nach Anspruch 10 oder 11, **dadurch gekennzeichnet, dass** der Betätigungshebel (60) eine Steuerkontur (61) aufweist, die dazu ausgebildet ist, dass bei der Verstellung des Riegelelements (26) von der Sperrstellung in die Freigabestellung das Spreizbetätigungselement (41) des Riegelelements (26) an der Steuerkontur (61) entlang gleitet.

13. Hängetaschengestell nach einem der vorhergehenden Ansprüche, **dadurch gekennzeichnet, dass** das Riegelelement (26), vorzugsweise jedes der Riegelelemente (26) derart an dem zugeordneten Schwenklager (20) gelagert ist, dass die Verstellung des Riegelelements (26) aus der Sperrstellung in die Freigabestellung eine Überlagerung aus einer Schwenkbewegung um eine Riegelachse (26a) und einer Translationsbewegung umfasst.

14. Hängetaschengestell (10) nach einem der vorhergehenden Ansprüche, **dadurch gekennzeichnet, dass** die beiden unteren Rahmenteile (12.2, 14.2) so dimensioniert und angeordnet sind, dass in der Schließstellung und in einer Ansicht entlang der Schwenkachse (12a, 14a) seitliche Abschnitte (12.2s, 14.2s) der beiden unteren Rahmenteile (12.2, 14,2) einander wenigstens abschnittsweise überlappen oder miteinander verschränkt sind.

15. Hängetasche (1), umfassend ein Hängetaschengestell (10) nach einem der vorhergehenden Ansprüche sowie an dem ersten und dem zweiten Seitenwandrahmen (12, 14) vorgesehene Flächenelemente (36, 38), vorzugsweise in Form einer Bespannung (40) mit einem Folienmaterial oder einem Textilmaterial, so dass der erste Seitenwandrahmen (12) mit dem daran vorgesehenen Flächenelement (36) die erste Taschenseitenwand (13) der Hängetasche (1) bildet, und der zweiten Seitenwandrahmen (14) mit dem daran vorgesehenen Flächenelement (38) die zweite Taschenseitenwand (15) der Hängetasche (1) bildet.

## Claims

1. Hanging bag frame (10) for a hanging bag (1) as conveyed material receptacle for transporting conveyed material in a suspended conveyor system, wherein the hanging bag frame (10) comprises:
- first and second side wall frames (12, 14) for defining a first and a second side wall (13, 15), which, facing each other, define a conveyed material receiving area (16) therebetween,
wherein each of the side wall frames (12, 14) has an upper (12.1, 14.1) and a lower frame part (12.2, 14.2),
- a hinge mechanism (18) with two pivot bearings (20), preferably in the form of two pivot bearing components (21), which are provided on opposite side edges (10s) of the hanging bag frame (10) and pivotally support at least one of the two lower frame parts (12.2, 14.2) about an associated pivot axis (12.2a, 14.2a), such that at least the lower frame parts (12.2, 14.2) of the first and second side wall frame (12, 14) are unfoldable from a closed position to an open position for opening the conveyed material receiving area (16),
- a locking mechanism (24) with at least one locking element (26) being adjustable between a release position and a locked position and adapted to lock, in the locked position, the lower frame parts (12.2, 14.2) of the first and second side wall frame (12, 14) in the closed position, and
- a spreading mechanism (28) which is designed, during or after an adjustment of the at least one locking element (26) from the locked position into the release position, to unfold the lower frame parts (12.2, 14.2) from the closed position to the open position, **characterised in that** the at least one locking element (26) is provided or supported on one of the pivot bearings (20) to be adjustable between the locked position and the release position.

2. Hanging bag frame (10) according to claim 1,
**characterised in that** the spreading mechanism (28) is also provided on one of the pivot bearings (20) or on both pivot bearings (20) and is preferably integrated on the locking element (26), respectively.

3. Hanging bag frame (10) according to claim 2,
**characterised in that** the at least one locking element (26) comprises at least one inclined surface section (27)designed to act on the lower frame part (12.2, 14.2) of the first and/or the second side wall frame (12, 14) during the adjustment of the locking element (26) from the locked position to the release position second side wall frame such that the lower frame parts (12.2, 14.2) of the first and the second side wall frame (12, 14) are unfolded from the closed position to the open position.

4. Hanging bag frame (10) according to one of claims 1 to 3, preferably according to claim 2, **characterised in that** the at least one locking element (26), preferably each of the locking elements (26), is supported on the associated pivot bearing (20) about a locking axis (26a) to be pivotable between the locked position and the release position, wherein the locking axis (26s) extends substantially orthogonal to the pivot axis (12.2a, 14.2a) of the at least one lower frame part (12.2, 14.2).

5. Hanging bag frame (10) according to any of the preceding claims, **characterised in that** the at least one locking element (26) or each of the locking elements (26) comprises at least one claw section (29), which is designed, when the lower frame parts (12.2, 14.2) of the first and second side wall frames (12, 14) are in the closed position and the locking element (26) is in the locked position, to overlap the lower frame part (12.2, 14.2) of the first and/or the second side wall frame (12, 14) at least partially and thus to prevent an adjustment from out of the closed position.

6. Hanging bag frame (10) according to any of the preceding claims, **characterised in that** the at least one locking element (26) or each of the locking elements (26) is biased towards the locked position, preferably by means of a spring (34) provided on the associated pivot bearing (20).

7. Hanging bag frame (10) according to any one of the preceding claims, preferably according to claim 6, **characterised in that** the locking element (26) has at least one further inclined surface section (39) which is designed, when the locking element (36) is in the locked position, to be acted upon by at least one of the lower frame parts (12.2, 14.2) in its movement from the open position to the closed position such that the locking element (26) moves from the locked position in the direction of the release position.

8. Hanging bag frame (10) according to any of the preceding claims, **characterised in that** the at least one locking element (26) comprises a plastic material and is preferably integrally produced from the plastic material.

9. Hanging bag frame (10) according to any one of the preceding claims, preferably according to claim 8, **characterised in that** each of the pivot bearings (20) comprises a plurality of composable components (52, 54, 56), of which at least two, preferably a majority or all, can be connected to one another by snap connections.

10. Hanging bag frame (10) according to any of the preceding claims, **characterised in that** the at least one lower frame part (12.2, 14.2) that is pivotally supported on the pivot bearings (20a) about the associated pivot axis (12a, 14a) is fixedly connected to an actuating lever (60) which is adapted to cooperate with a spreading actuating element (41) provided on the locking element (26) to unfold the lower frame parts (12.2, 14.2) in case of an adjustment of the locking element (26) from the locked position to the release position.

11. Hanging bag frame (10) according to claim 10, **characterised in that** in a suspended transport position of the hanging bag (1), the actuating lever (60) is arranged at least in sections above the pivot axis (12a, 14a).

12. Hanging bag frame according to claim 10 or 11, **characterised in that** the actuating lever (60) has a control contour (61) which is designed such that during the adjustment of the locking element (26) from the locked position to the release position, the spreading actuating element (41) of the locking element (26) slides along the control contour (61).

13. Hanging bag frame according to any of the preceding claims, **characterised in that** the locking element (26), preferably each of the locking elements (26) is mounted on the associated pivot bearing (20) such that the adjustment of the locking element (26) from the locked position to the release position, comprises a superposition of a pivoting movement about a locking axis (26 a) and a translational movement.

14. Hanging bag frame (10) according to any of the preceding claims, **characterised in that** the two lower frame parts (12.2, 14.2) are dimensioned and arranged such that in the closed position and in a view along the pivot axis (12a, 14a), lateral sections (12.2s, 14.2s) of the two lower frame parts (12.2, 14.2) overlap each other at least in sections or are interlocked with each other.

15. Hanging bag (1), comprising a hanging bag frame (10) according to one of the preceding claims as well as surface elements (36, 38) provided on the first and the second side wall frame (12, 14), preferably in the form of a covering (40) with a film material or a textile material, such that the first side wall frame (12) with the surface element (36) provided thereon forms the first bag side wall (13) of the hanging bag (1), and the second side wall frame (14) with the surface element (38) provided thereon forms the second bag side wall (15) of the hanging bag (1).

## Revendications

1. Cadre de sac suspendu (10) pour un sac suspendu (1) en tant que conteneur de produit transporté pour le transport de produit dans un dispositif de transport suspendu, dans lequel le cadre de sac suspendu (10) comprend :
- un premier et un second cadre de paroi latérale (12, 14) pour délimiter une première et une seconde paroi latérale de sac (13, 15), qui délimitent entre elles, en vis-à-vis, une zone de réception de produit transporté (16),
dans lequel chacun des cadres de paroi latérale (12, 14) comprend une partie de cadre supérieure (12.1, 14.1) et une partie de cadre inférieure (12.2, 14.2),
- un mécanisme articulé (18) comprenant deux paliers de pivotement (20), de préférence sous la forme de deux composants de palier de pivotement (21), qui sont prévus sur des bords latéraux opposés (10s) du cadre de sac suspendu (10) et qui supportent au moins une des deux parties de cadre inférieures (12.2, 14.2) de manière à pouvoir pivoter autour d'un axe de pivotement associé (12.2a, 14.2a), de sorte qu'au moins les parties de cadre inférieures (12.2, 14.2) du premier et du deuxième cadre de paroi latérale (12, 14) peuvent être rabattus d'une position fermée à une position ouverte pour ouvrir la zone de réception de produit transporté (16),
- un mécanisme de verrouillage (24) avec au moins un élément de verrouillage (26) qui peut être réglé entre une position de libération et une position de blocage et qui est adapté pour déplacer les parties de cadre inférieures (12.2, 14.2) du premier et du deuxième cadre de paroi latérale (12, 14) en position fermée, et
- un mécanisme d'écartement (28) qui est adapté pour déplier les parties de cadre inférieures (12.2, 14.2) de la position fermée vers la position ouverte pendant ou après un réglage dudit au moins un élément de verrouillage (26) de la position de blocage à la position de libération,
**caractérisé en ce que** ledit au moins un élément de verrouillage (26) est prévu ou supporté à un des paliers de pivotement (20) réglable entre la position de blocage et la position de libération.

2. Cadre de sac suspendu (10) selon la revendication 1,
**caractérisé en ce que** le mécanisme d'écartement (28) est également prévu sur l'un des paliers de pivotement (20) ou sur les deux paliers de pivotement (20) et est de préférence intégré respectivement à l'élément de verrouillage (26).

3. Cadre de sac suspendu (10) selon la revendication 2,
**caractérisé en ce que** ledit au moins un élément de verrouillage (26) comprend au moins une section de surface inclinée (27) qui est adaptée pour agir lors du déplacement de l'élément de verrouillage (26) de la position de blocage vers la position de libération sur la partie de cadre inférieure (12.2, 14.2) du premier et/ou du deuxième cadre de paroi latérale (12, 14) de telle sorte que les parties de cadre inférieures (12.2, 14.2) du premier et du deuxième cadre de paroi latérale (12, 14) sont dépliées de la position fermée vers la position ouverte.

4. Cadre de sac suspendu (10) selon l'une des revendications 1 à 3,
de préférence selon la revendication 2, **caractérisé en ce que** ledit au moins un élément de verrouillage (26), de préférence chacun des éléments de verrouillage (26), est prévu sur le palier de pivotement (20) associé de manière à pouvoir pivoter autour d'un axe de verrouillage (26a) entre la position de blocage et la position de libération, dans lequel l'axe de verrouillage (26s) est sensiblement orthogonal à l'axe de pivotement (12.2a, 14.2a) dudit au moins une partie de cadre inférieure (12.2, 14.2).

5. Cadre de sac suspendu (10) selon l'une des revendications précédentes, **caractérisé en ce que** ledit au moins un élément de verrouillage (26) ou chacun des éléments de verrouillage (26) comprend au moins une partie de griffe (29) qui est adaptée, lorsque les parties de cadre inférieures (12.2, 14. 2) du premier et du deuxième cadre de paroi latérale (12, 14) sont en position fermée et l'élément de verrouillage (26) est en position de blocage, pour s'étendre sur la partie de cadre inférieure (12.2, 14.2) du premier et/ou du deuxième cadre de paroi latérale (12, 14) au moins dans certaines zones et pour empêcher ainsi qu'elle ne soit déplacée hors de la position fermée.

6. Cadre de sac suspendu (10) selon l'une des revendications précédentes, **caractérisé en ce que** ledit au moins un élément de verrouillage (26) ou chacun des éléments de verrouillage (26) est précontraint vers la position de verrouillage, de préférence au moyen d'un ressort (34) prévu sur le palier de pivotement (20) associé.

7. Cadre de sac suspendu (10) selon l'une des revendications précédentes, de préférence selon la revendication 6, **caractérisé en ce que** l'élément de verrouillage (26) comprend au moins une autre section de surface inclinée (39) qui est adaptée, lorsque l'élément de verrouillage (36) est en position de blocage, pour être influencée par au moins une des parties de cadre inférieures (12.2, 14.2) lors de son déplacement de la position ouverte vers la position fermée de telle manière que l'élément de verrouillage (26) se déplace de la position de blocage vers la position de libération.

8. Cadre de sac suspendu (10) selon l'une des revendications précédentes, **caractérisé en ce que** ledit au moins un élément de verrouillage (26) comprend une matière plastique et est de préférence fabriqué en une seule pièce à partir de la matière plastique.

9. Cadre de sac suspendu (10) selon l'une des revendications précédentes, de préférence selon la revendication 8, **caractérisé en ce que** chacun des paliers de pivotement (20) comprend plusieurs composants assemblables (52, 54, 56) dont au moins deux, de préférence une majorité ou la totalité, peuvent être reliés entre eux par des assemblages par encliquetage.

10. Cadre de sac suspendu (10) selon l'une des revendications précédentes, **caractérisé en ce que** ladite au moins une partie de cadre inférieure (12.2, 14.2) montée de manière pivotante sur les paliers de pivotement (20) autour de l'axe de pivotement associé (12a, 14a) est fermement relié à un levier d'actionnement (60) qui est adapté pour coopérer avec un élément d'actionnement d'écartement (41) prévu sur l'élément de verrouillage (26) afin de déplier les parties de cadre inférieures (12.2, 14.2) lorsque l'élément de verrouillage (26) est déplacé de la position de blocage à la position de libération.

11. Cadre de sac suspendu (10) selon la revendication 10,
**caractérisé en ce que** dans une position de transport suspendue du sac suspendu (1), le levier d'actionnement (60) est disposé au moins par sections au-dessus de l'axe de pivotement (12a, 14a).

12. Cadre de sac suspendu selon la revendication 10 ou 11,
**caractérisé en ce que** le levier d'actionnement (60) présente un contour de commande (61) qui est adapté de telle sorte que, lorsque l'élément de verrouillage (26) est déplacé de la position de blocage à la position de libération, l'élément d'actionnement d'écartement (41) de l'élément de verrouillage (26) glisse le long du contour de commande (61).

13. Cadre de sac suspendu selon l'une des revendications précédentes, **caractérisé en ce que** l'élément de verrouillage (26), de préférence chacun des éléments de verrouillage (26), est monté sur le palier de pivotement (20) associé de telle manière que le déplacement de l'élément de verrouillage (26) de la position de blocage à la position de libération comprend une superposition d'un mouvement de pivotement autour d'un axe de verrouillage (26a) et d'un mouvement de translation.

14. Cadre de sac suspendu (10) selon l'une des revendications précédentes, **caractérisé en ce que** les deux parties de cadre inférieures (12.2, 14.2) sont dimensionnées et disposées de telle sorte que, en position fermée et en vue le long de l'axe de pivotement (12a, 14a), les sections latérales (12.2s, 14.2s) des deux parties de cadre inférieures (12.2, 14.2) se chevauchent au moins par sections ou sont emboîtées l'une dans l'autre.

15. Sac suspendu (1) comprenant un cadre de sac suspendu (10) selon l'une des revendications précédentes et des éléments de surface (36, 38) prévus sur les premier et deuxième cadres de parois latérales (12, 14), de préférence sous la forme d'un revêtement (40) avec un matériau en feuille ou un matériau textile, de sorte que le premier cadre de paroi latérale (12) avec l'élément de surface (36) prévu sur celui-ci forme la première paroi latérale de sac (13) du sac suspendu (1), et le deuxième cadre de paroi latérale (14) avec l'élément de surface (38) prévu sur celui-ci forme la deuxième paroi latérale de sac (15) du sac suspendu (1).
